(19) Europäisches Patentamt
European Patent Office
Office européen des brevets

(11) EP 4 470 382 A1

(12) EUROPEAN PATENT APPLICATION

(43) Date of publication:
**04.12.2024 Bulletin 2024/49**

(21) Application number: **23382522.3**

(22) Date of filing: **31.05.2023**

(51) International Patent Classification (IPC):
***A23C 9/12*** (2006.01) ***A23C 9/13*** (2006.01)
***A23C 9/152*** (2006.01) ***A23C 19/04*** (2006.01)

(52) Cooperative Patent Classification (CPC):
**A23C 9/1209; A23C 9/1216; A23C 9/13; A23C 9/1522; A23C 19/041**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **FUNDACION UNIVERSITARIA SAN ANTONIO (UCAM)**
  **30107 Guadalupe (Murcia) (ES)**
- **Università Politecnica Delle Marche**
  **60121 Ancona (IT)**
- **HIGH AGRONOMIC INSTITUTE OF CHOTT-MARIEM, UNIVERSITY OF SOUSSE**
  **4042 Sousse (TN)**

(72) Inventors:
- **TEJADA PORTERO, Luis**
  **30010 Murcia (ES)**
- **AQUILANTI, Lucia**
  **60131 Ancona (IT)**
- **RAMPANTI, Giorgia**
  **63074 Ascoli Piceno (IT)**
- **DRIDI AL MOHANDES, Bouthaina**
  **4042 Sousse (TN)**
- **ESSAIDI, Ismahen**
  **4042 Sousse (TN)**
- **BANDE DE LEON, Cindy Maria**
  **30006 Murcia (ES)**

(74) Representative: **Díaz Pacheco, Maria Desamparados**
**MIO patentes & marcas**
**Avda. de Granada, S/N**
**Centro de Negocios Vega Plaza - Oficina 14**
**30500 Molina de Segura (Murcia) (ES)**

Remarks:
The complete document including Reference Table(s) and the Sequence Listing(s) can be downloaded from the EPO website

# (54) PLANT EXTRACT AND METHODS COMPRISING THEREOF

(57) The present invention discloses a plant extract of *Onopordum nervosum ssp platylepis Murb,* a method for milk clotting and a method to obtain hydrolyzed peptides comprising said plant extract, including the edible products obtained by said methods. Regarding the first method, concrete conditions of Temperature, pH, and $CaCl_2$ which are the optimum conditions to clot milk from cows, ewes and goat with said extract are also disclosed

EP 4 470 382 A1

## Description

### Technical Field

The present invention relates to a *Onopordum nervosum* ssp *platylepis* Murb plant extract, a method of proteolysis and milk clotting using said plant extract and the functional foods obtained in said methods

### Background

The enzymatic clotting of milk is an essential step in the majority of dairy products production, particularly cheese making. One of the main proteases responsible for this coagulation is chymosin, which is present in ruminant rennet and has been used for centuries in the manufacture of different types of cheese in the dairy industry.

Most of the commercial animal rennet used in dairies comes from recombinant sources, while only 20-30% of it is of natural origin. The worldwide increase in cheese production leads to a decrease in the supply of animal rennet, increasing the demand for new coagulant substitutes, such as plant-derived proteases.

These proteases are obtained by aqueous maceration of the different parts of the plant and have a high potential for use as coagulants in the manufacture of cheese, replacing animal rennet.

Numerous studies have been carried out on these plant enzymes obtained from aqueous extracts, such as those derived from papaya (papain), pineapple (bromelain), and other enzymes, where the ratio of proteolytic to clotting activity is not sufficiently high or they have a proteolytic activity that is excessively high for the production of commercial cheeses. In addition, these vegetable coagulants have certain limitations, mainly those related to the texture and sensory quality of the cheeses produced.

The genus *Onopordum L.* belongs to the family *Asteraceae,* and some of its species are widely distributed in Europe, northern Africa, the Canary Islands, the Caucasus, and southwest and central Asia. Thistles of this genus are native mainly to the Mediterranean region in Europe and have been studied for their potential as antimicrobial, haemostatic and hypotensive agents.

On the other hand, very few studies describe the use of *Onopordum spp.* in dairy products production, particularly cheese production. The scientific article Mozzon M, Foligni R, Mannozzi C, Zamporlini F, Raffaelli N, Aquilanti L. Clotting Properties of Onopordum tauricum (Willd.) Aqueous Extract in Milk of Different Species. Foods. 2020; 9(6):692. https://doi.org/10.3390/foods9060692 disclosed a study comparing the clotting activity of *Onopordum tauricum Willd.* in milk of different origins. However, this document does not disclose the clotting activity of *Onopordum nervosum ssp platylepis Murb,* which is the plant extract of the present invention. The advantages of using an extract of this species are its ability to have milk clotting activity, which allows it to be used in the production of cheese and dairy products, and its marked proteolytic activity, which allows it to hydrolyse proteins and produce peptides with bioactivity which can be used in the production of functional foods with health-promoting properties such as antioxidant activity and/or antihypertensive activity, among many others.

Nevertheless, the present invention discloses the optimal conditions for milk clotting of a plant extract of *Onopordum nervosum ssp platylepis Murb* (OP) species, using milk from different origins and its use for protein hydrolysis.

### Description

In the present specification, "functional food" relates to an edible product comprising hydrolyzed peptides obtained by the proteolytic activity of a plant extract of *Onopordum nervosum ssp platylepis Murb* with health-promoting properties such as antioxidant activity and/or antihypertensive activity

The first object of the invention relates to a plant extract obtained from *Onopordum nervosum ssp platylepis Murb*

This extract is suitable for the clotting of milk.

*Onopordum nervosum* ssp *platylepis Murb* is one of rare thistles species endemic in Tunisia, and even there, its presence is dependent on rainfall. Also, its specific morphometric characteristics distinguished it from the other *Onopordum* (O. *tauricum, O. acanthium).*

The term "plant extract" as used herein is intended to mean any mixture of substances which is derived, obtained or extracted from *Onoprdum nervosum* ssp *platylepis, Murb* plant or said plant part by conventional separation techniques and has a clotting and proteolytic activity.

The plant extract of the invention is substantially aseptic, which is marketed as such powder free of preservatives, easily standardizable, soluble in water or even in the milk itself, stable at room temperature, with high coagulant activity, and that can be added directly to the milk for its clotting.

The plant extract of the invention can be obtained from agro-industrial waste, bulbs, seeds, leaves, follicles, styles, stigmas, flowers and whole aerial parts of plants selected from *Onoprdum nervosum* ssp *platylepis, Murb* preferably styles, and stigmas

In a particular embodiment the plant extract is a freeze-dried plant extract or lyophilized plant extract. The advantage of lyophilization is that the microbial load is decreased and an increase in the conservation period of the extract is achieved.

The advantage of using the plant extract of the invention instead of other plant extracts of the same genus is that the edible products obtained after the clotting of the milk and/or protein hydrolyzation are functional foods because they have health-promoting properties such as antioxidant activity and/or antihypertensive activity, among many others

The second object of the invention relates to a method of enzymatic milk clotting comprising the following steps:

- providing a *Onopordum nervosum ssp platylepis Murb.* plant extract
- putting in contact said plant extract with milk under the following conditions:

  ◦ A range of temperature from 20°C to 85°C
  ◦ A $CaCl_2$ concentration range from 2 mM to 70 mM
  ◦ A pH range from 3 to 8
  during the required time for the milk to be clotted, and

- collecting the clotted milk

Enzymatic milk clotting has to be understand in the process of making milk derivatives such as cheese.

The required time means that at least 90% of the milk is clotted, preferably at least 95%, even more preferably 100%.

The present invention demonstrates that *Onopordum nervosum ssp platylepis Murb.* plant extract are excellent coagulants for cheese production. They also showed proteolytic activity, which favors the development of changes in the organoleptic properties of the cheeses, such as flavour intensity, aroma and texture and the generation of peptides with possible bioactivity.

In a particular embodiment the lyophilized plant extract of the present invention can be added directly to the milk to be clotted, in this case, the concentration of the plant extract in the milk is between 0.01 mg/ml and 10 mg/ml, preferably 0.02 mg/ml and 8 mg/ml, preferably 0.03 mg/ml and 6 mg/ml, preferably 0.05 mg/ml and 5 mg/ml, more preferably between 0.15 mg/ml and 4 mg/ml, or 0.3 mg/ml and 3 mg/ml.

In a particular embodiment the plant extract, after being lyophilized or freeze-dried is dissolved water to obtain an aqueous plant extract. before the method of the invention, the concentration of the aqueous plant extract is between about 2mg/ml and about 60mg/ml, or between about 5mg/ml and about 60mg/ml, or between about 10mg/ml and about 60mg/ml, or between about 15mg/ml and about 60mg/ml, or between about 20mg/ml and about 60mg/ml, or between about 25mg/ml and about 60mg/ml, or between about 30mg/ml and about 60mg/ml, or between about 35mg/ml and about 60mg/ml of water.

Preferably between about 30mg/ml and about 50mg/ml, more preferably between about 35mg/ml and about 45mg/ml of water.

The water in which the lyophilized plant extract is dissolve can be replaced by any other liquid with suitable chemical characteristics and appropriate for the elaboration of edible products.

In a particular embodiment, the aqueous plant extract is then mixed with milk in range from about 0.1:10 aqueous plant extract:milk, to about 3:10 aqueous plant extract:milk. This is, between, 0.1 to 3 ml of the aqueous plant extract that can be at any concentration as discussed in the 2 previous paragraphs, in 10 ml of milk. Preferably the range is about 0.5:10 to 2:10, more preferably between 0.8:10 to 1.5:10, even more preferably about 0.9:10 to 1.2:10.

In both cases: when the lyophilized plant extract is added directly to the milk to be clotted or when the lyophilized plant extract is previously dissolved in water or in a suitable liquid, the concentration of the plant extract in the milk is between 0.01 mg/ml and 10 mg/ml, preferably 0.02 mg/ml and 8 mg/ml, preferably 0.03 mg/ml and 6 mg/ml, preferably 0.05 mg/ml and 5 mg/ml, more preferably between 0.15 mg/ml and 4 mg/ml, or 0.3 mg/ml and 3 mg/ml.

In a particular embodiment, the range of temperatures is between about 20°C and about 85°C, or about 30°C and about 85°C, or between about 35°C and about 85°C, or between about 40°C and about 85°C, or between about 45°C and about 85°C, or between about 50°C and about 85°C, or between about 55°C and about 85°C, or between about 60°C and about 85°C, or between about 60°C and about 85°C.

Preferably from about 60°C and about 80°C, more preferably from about 65°C and about 75°C, even more preferably from about 65°C and less than 70°C

In a particular embodiment, the $CaCl_2$ concentration ranges from about 2 mM to 70 mM, preferably from about 3 mM to 70 mM, more preferably from about 4 mM to 70 mM, even more preferably from about 5 mM to 70 mM.

Preferably, for cow's milk, the $CaCl_2$ concentration ranges from about 50 mM to 70 mM, for goat's milk and ewe's milk, the $CaCl_2$ concentration preferably ranges from 2 mM to 20 Mm.

In a particular embodiment, the pH range is between about 3 and 8, preferably from about 4 to 8, more preferably

from about 5 to 8, even more preferably from about 5.2 to 7, even more preferably from about 5.3 to about 6, even more preferably from about 5.4 to 6.5.

In a particular embodiment, the milk can be from an animal, such a goat, ewe, horse, camel and cow or mixtures thereof.

During cheesemaking, several factors simultaneously intervene during the process, for this reason, the response surface methodology (RSM) was used as it allows the influence of several factors on a particular response to be analysed by combining mathematical and statistical techniques. With the conventional method, only the variation of one of the factors can be explored while keeping the rest of the intervening variables constant (Mozzon et al., 2020).

Predicted model equations for the milk clotting time (MCT) are defined by using a *Onoprdum platylepis* plant extract and ewe's or goat's milk. The predicted model equations for milk clotting time (MCT) as a function of temperature, pH and calcium chloride concentration are defined as follows:
When milk is ewe's milk:

$$MCT = 11045.57 + (-870.04 * [CaCl_2]) + (1001.07 * pH) + (-549.53 * Temperature) + (-11.05 * [CaCl_2]^2) + (-107.84 * pH^2) + (5.96 * Temperature^2) + (47.87 * [CaCl_2] * pH) + (15.70 * [CaCl_2] * Temperature) + (0.21 * pH * Temperature)$$

When milk is goat's milk:

$$MCT = 5743.55 + (-741.86 * [CaCl_2]) + 1986.65 * pH + (-421.4 * Temperature) + (-18.28 * [CaCl_2]^2) + (-96 * pH^2) + 6.92 * Temperature^2) + 40.1 * [CaCl_2] * pH + 14.79 * [CaCl_2] * Temperature + (-31.75 * pH * Temperature)$$

These predicted model works best with a *Onopordum nervosum ssp platylepis Murb* aqueous plant extract in a concentration between about 5 mg of lyophilized plant extract per 1mL of water, (5mg/ml) to about 30 mg/ml, preferably from about 10 mg/ml to about 27 mg/ml, more preferably from about 15 mg/ml to about 25 mL, even more preferably from about 17 mg/ml to about 23 mg/ml, even more preferably about 20 mg/ml. The aqueous plant extract is then mixed with milk in range from about 0.1:10 aqueous plant extract:milk, to about 3:10 aqueous plant extract:milk

In another embodiment, the model equations are developed for a plant extract concentration in milk of about 0.5 mg/ml to 3 mg/ml, preferably about 2 mg/ml.

In a preferred embodiment, when the milk is obtained from ewe, the best clotting activity is achieved at a temperature of about 34°C-38°C, a pH of about 5.2-5.8, and $CaCl_2$ concentration of about 4mM-8 mM

In another preferred embodiment, when the milk is obtained from ewe, the best clotting activity is achieved at a temperature of about 36°C, a pH of about 5.5, and $CaCl_2$ concentration of about 6 mM.

In another preferred embodiment, when the milk is obtained from goat, the best clotting activity is achieved at a temperature of about 34°C-38°C, a pH of about 6.2-6.8, and $CaCl_2$ concentration of about 4mM-8 mM

In another preferred embodiment, when the milk is obtained from goat, the best clotting activity is achieved at a temperature of about 36°C, a pH of about 6.5, and $CaCl_2$ concentration about 6 mM

In another preferred embodiment, when the milk is obtained from cow the plant extract concentration is about 4mg/ml of milk, temperature is about 70°C, $CaCl_2$ concentration is about 60 mM and pH is about 5.5.

The clotting of the milk can occur in a wide range of $CaCl_2$ concentration. In the case of milk obtained from cows, with a 60 mM $CaCl_2$ concentration the shortest time to clot the milk was achieved. This result is surprising because this concentration is much higher than the usual concentrations used in the ostentation of clotted milk for the elaboration of dairy products.

In another particular embodiment, the plant extract of the invention is combined with animal rennet and/or other(s) plant extract(s) such as *Cynara cardunculus, C. scolymus,* or *C humilis*

Therefore, another object relates to a model to determine the milk clotting time (MCT) by using a *Onoprdum platylepis* plant extract and ewe's or goat's milk as a function of temperature, pH and calcium chloride concentration as defined previously Another object of the invention relates to the clotted milk obtained by the method described above.

Another object of the invention relates to a process to obtain dairy products using the clotted milk described above, such as cheese or desserts like curds.

Another object of the invention relates to a dairy product obtained from the clotted milk described above, such as cheese or desserts like curds.

Thus a further advantage of *Onopordum nervosum ssp platylepis* Murb. plant extract for clotting milk is that

dairy products derived from the clotted milk obtained with the plant extract described herein will have a higher antioxidant activity and/or antihypertensive activity, among many others compared with the dairy products of the state of the art.

Another object of the invention relates to a process to obtain hydrolyzed peptides from edible products using the plant extract defined taking advantage of its particular proteolytic activity

In the present specification edible products comprise dairy products. Edible products can be selected from the group consisting of eggs, dairy products such as milk, cream and yogurt and any edible food containing protein such as meats and poultry, nuts, seeds, fish, shellfish, beans, peas, lentils, tofu and soybeans. In a particular embodiment the edible product is a dairy product and mixtures thereof, preferably milk.

Although the clotting activity performed by the plant extract of the invention described above also comprises proteolytic activity, it is presented as a different object of the invention herein, because the choice of edible foods that can be subjected to this proteolytic process is wider that the clotting activity, in which only milk is susceptible.

Hydrolyzed peptides, are proteins that have been broken down into smaller peptides during the food processing, as will be shown in the examples of the invention the plant extract obtained from *Onopordum nervosum ssp platylepis Murb* has a very relevant proteolytic activity.

In a particular embodiment the hydrolyzed peptides obtained by the proteolytic activity of *Onopordum nervosum ssp platylepis Murb* are derived from casein.

As it will be shown in the embodiments, the hydrolyzed peptides produced by this plant extract have antidiabetic, antifungal, inmunostimulating and immunomodulating, antithrombotic, and inhibitory insuline secretion activities, these activities are important for human health, thus the products obtained with plant extract of the invention are much healthier and beneficial than the products obtained with plant extracts from other species.

In the food industry, hydrolyzed peptides are commonly used as food additives due to their unique functional properties. They are used in a wide variety of food products, including infant formula, sports nutrition products, and medical foods.

Hydrolyzed peptides are particularly useful in food products because they are easily digestible and can be absorbed more quickly by the body than intact proteins. Furthermore, hydrolyzed peptides can improve the taste, texture, and stability of food products. They can also enhance the solubility and emulsification properties of certain foods, such as protein powders and beverages.

The lyophilized plant extract of the present invention can be put in contact directly with the edible product from which hydrolyzed peptides are to be obtained from. The concentration of the plant extract is between 0.05 mg/ml and 3 mg/ml, preferably 0.1 mg/ml and 1.5 mg/ml, more preferably between 0.15 mg/ml and 0.5 mg/ml

In a particular embodiment, the range of temperatures is between about 20°C and about 85°C, or about 30°C and about 85°C, or between about 35°C and about 85°C, or between about 40°C and about 85°C, or between about 45°C and about 85°C, or between about 50°C and about 85°C, or between about 55°C and about 85°C, or between about 60°C and about 85°C, or between about 60°C and about 85°C.

Preferably from about 60°C and about 80°C, more preferably from about 65°C and about 75°C, even more preferably from about 65°C and less than 70°C

In a particular embodiment, the $CaCl_2$ concentration ranges from about 2 mM to 70 mM, preferably from about 3 mM to 70 mM, more preferably from about 4 mM to 70 mM, even more preferably from about 5 mM to 70 mM.

In a particular embodiment, the pH range is between about 3 and 8, preferably from about 4 to 8, more preferably from about 5 to 8, even more preferably from about 5.2 to 7, even more preferably from about 5.3 to about 6, even more preferably from about 5.4 to 6.5.

In a preferred embodiment the conditions to obtain hydrolyzed peptides are, using a concentration of about 2 mg/ml of *Onopordum nervosum ssp platylepis Murb.* plant extract for 60 minutes with bovine milk casein at a 6.2 pH

In another preferred embodiment the conditions to obtain hydrolyzed peptides are, using a concentration of about 4 mg/ml of *Onopordum nervosum ssp platylepis Murb.* plant extract for 50 minutes with bovine milk casein at a 6.2 pH

In a particular embodiment of the invention, hydrolyzed peptides relates to hydrophobic hydrolyzed peptides. These hydrophobic hydrolyzed peptides have been shown to be largely responsible for exerting health-promoting properties such as antioxidant activity through free radical scavenging, and antihypertensive activity by inhibiting angiotensin-converting enzyme (ACE) activity resulting in a reduction in blood pressure.

Thus, a further advantage of the invention is that edible products subjected to the proteolytic process of the plant extract obtained from *Onopordum nervosum ssp platylepis* Murb. described herein give rise to functional foods with a higher antioxidant activity compared with the dairy products of the state of the art.

As indicated previously, these dairy products or edible products have health-promoting properties such as antioxidant activity and/or antihypertensive activity, among many others.

Another object of the invention relates to a functional food containing the hydrolyzed peptides described previously.

In addition, the present invention also provides the following clauses:

1. A plant extract obtained from *Onopordum nervosum ssp platylepis Murb*

2. The plant extract according to the preceding clause, wherein the plant extract is obtained from styles and/or stigmas.

3. A method of enzymatic milk clotting comprising the following steps:

- providing the *Onopordum nervosum ssp platylepis Murb* plant extract according to any of the preceding clauses 1 to 2
- putting in contact said plant extract with milk under the following conditions:

  ◦ A range of temperature from 20°C to 85°C
  ◦ A $CaCl_2$ concentration range from 2 mM to 70 mM
  ◦ A pH range from 3 to 8
  during the required time for the milk to be clotted, and

- collecting the clotted milk.

4. The method according to the preceding clause, wherein the plant extract is in a concentration of between 0.01 mg/ml and 10 mg/ml of milk.

5. The method according to the preceding clause, wherein before putting in contact the plant extract with the milk, said plant extract is dissolved in water to obtain an aqueous plant extract at a concentration of about 2mg/ml to about 60mg/ml.

6. The method according to the preceding clause, wherein the aqueous plant extract is put in contact with the milk in range from about 0.1:10 aqueous plant extract:milk, to about 3:10 aqueous plant extract:milk.

7. The method according to any of the preceding clauses 3 to 6, wherein the temperature is between 30°C and 80°C.

8. The method according to any of the preceding clauses 3 to 7, wherein the $CaCl_2$ concentration is between 3 mM to 70 mM.

9. The method according to any of the preceding clauses 3 to 8, wherein the pH is between 4 and 8.

10. The method according to any of the preceding clauses 3 to 9, wherein the milk is obtained from a goat, ewe, horse, camel and cow or mixtures thereof.

11. The method according to any of the preceding clauses 3 to 10, wherein the milk is obtained from ewe, a parameter selected from temperature, $CaCl_2$, pH and time can be determined using the following model, before carrying out the method of clause 3:

$$MCT = 11045.57 + (-870.04 * [CaCl_2]) + (1001.07 * pH) + (-549.53 * Temperature) + (-11.05 * [CaCl_2]^2) + (-107.84 * pH^2) + (5.96 * Temperature^2) + (47.87 * [CaCl_2] * pH) + (15.70 * [CaCl_2] * Temperature) + (0.21 * pH * Temperature).$$

12. The method according to any of the preceding clauses 3 to 11, wherein the milk is obtained from ewe and the Temperature is 34°C to 38°C, the pH is 5.2 to 5.8, and $CaCl_2$ concentration is 4mM to 8mM

13. The method according to any of the preceding clauses 3 to 10, wherein the milk is obtained from goat, a parameter selected from temperature, $CaCl_2$, pH and time can be determined using the following model, before carrying out the method of clause 3:

$$MCT= 5743.55 + (-741.86 * [ CaCl_2]) + 1986.65 * pH + ( -421.4 * Temperature) + (-18.28 * [CaCl_2]^2) + ( -96*pH^2) +6.92 * Temperature^2) + 40.1 * [CaCl_2] * pH + 14.79 * [CaCl_2] * Temperature + (-31.75 * pH * Temperature)$$

14. The method according to any of the preceding clauses 3 to 10 and 13, wherein the milk is obtained from goat and the Temperature is 34°C to 38°C, the pH is 6.2 to 6.8, and $CaCl_2$ concentration is 4mM to 8mM.

15. The method according to any of the preceding clauses 11 to 14, wherein the plant extract is in a concentration of between 0.01 mg/ml and 10 mg/ml of milk.

16. The method according to any of the preceding clauses 3 to 10, wherein the milk is obtained from cow the plant extract concentration is 4mg/ml milk, temperature is 70°C, $CaCl_2$ concentration is 60 mM and pH is 5.5.

17. The method according to any of the preceding clauses 3 to 14, wherein the milk is obtained from ewe, temperature is 36°C, the pH is 5.5, and $CaCl_2$ concentration is 6 mM

18. The method according to any of the preceding clauses 3 to 14, wherein the milk is obtained from goat, temperature is 36°C, the pH is 6.5, and $CaCl_2$ concentration is 6 mM.

19. The method according to any of the preceding clauses 3 to 18, wherein the milk is put in contact with animal rennet and/or other(s) plant extract(s) such as *Cynara cardunculus, C. scolymus,* or C *humilis*

20. A method to determine the Milk Clotting Time using a plant extract as defined in any of clauses 1 to 2 as a function of temperature pH and calcium chloride concentration so:

- when milk is ewe's milk:

$$MCT = 11045.57 + (-870.04 * [CaCl_2]) + (1001.07 * pH) + (-549.53 * Temperature) + (-11.05 * [CaCl_2]^2) + (-107.84 * pH^2) + (5.96 * Temperature^2) + (47.87 * [CaCl_2] * pH) + (15.70 * [CaCl_2] * Temperature) + (0.21 * pH * Temperature) \text{ or,}$$

- when milk is goat's milk:

$$MCT = 5743.55 + (-741.86 * [CaCl_2]) + 1986.65 * pH + (-421.4 * Temperature) + (-18.28 * [CaCl_2]^2) + (-96 * pH^2) + 6.92 * Temperature^2) + 40.1 * [CaCl_2] * pH + 14.79 * [CaCl_2] * Temperature + (-31.75 * pH * Temperature)$$

21. The method according the preceding clause, wherein the plant extract is in a concentration of between 0.5 mg/ml and 3 mg/ml of milk

22. Clotted milk obtained by the method described in any of the preceding clauses 3 to 20.

23. A dairy product obtained by from the clotted milk of clause 22.

24. A process to obtain hydrolyzed peptides from edible products using the plant extract according to the clause 1.

25. The process according to the preceding clause, wherein the edible product is selected from the group consisting of eggs, dairy products such as milk, cream and yogurt and any edible food containing protein such as meats and poultry, nuts, seeds, fish, shellfish, beans, peas, lentils, tofu and soybeans.

26. Functional food comprising the hydrolyzed peptides obtained with the process of any of clauses 24 or 23.

Each of the terms "comprising", "consisting essentially of," and "consisting of" may be replaced with either of the other two terms. The term "a" or "an" can refer to one of or a plurality of the elements it modifies (e.g., "a reagent" can mean one or more reagents) unless it is contextually clear either one of the elements or more than one of the elements is described. The term "about" as used herein refers to a value within 10% of the underlying parameter (i.e., plus or minus 10%; e.g., a weight of "about 100 grams" can include a weight between 90 grams and 110 grams). Use of the term "about" at the beginning of a listing of values modifies each of the values (e.g., "about 1, 2 and 3" refers to

"about 1, about 2 and about 3"). When a listing of values is described the listing includes all intermediate values and all fractional values thereof (e.g., the listing of values "80%, 85% or 90%" includes the intermediate value 86% and the fractional value 86.4%). When a listing of values is followed by the term "or more," the term "or more" applies to each of the values listed (e.g., the listing of "80%, 90%, 95%, or more" or "80%, 90%, 95% or more" or "80%, 90%, or 95% or more" refers to "80% or more, 90% or more, or 95% or more"). When a listing of values is described, the listing includes all ranges between any two of the values listed (e.g., the listing of "80%, 90% or 95%" includes ranges of "80% to 90%", "80% to 95%" and "90% to 95%"). Certain implementations of the technology are set forth in examples below.

**Brief description of the figures**

**Figure 1.** Effect of the plant extract concentration (enzymatic extract), expressed in mg plant extract/mL, on the clotting activity (MCA), expressed in U/mL, of standard bovine milk reconstituted using OP. Data are mean of three independent experiments (n = 3). Error bars correspond to standard error of mean. Items with different letters (a-k) are significantly different (HSD test, P < 0.05).

**Figure 2.** Effect of temperature, expressed in °C, on the clotting activity (MCA), expressed in U/mL, of standard bovine milk reconstituted using OP, at the concentrations of 20 mg extract/mL (A) and 40 mg extract/mL (B). Data are mean of three independent experiments (n = 3). Error bars correspond to standard error of mean. Items in figures 1A, 2A, and 3A with different letters (a-p) are significantly different (HSD test, P < 0.05). Items in figure 1B, 2B, and 3B with different letters (a-o) are significantly different (HSD test, P < 0.05).

**Figure 3.** Effect of pH on the clotting activity (MCA), expressed in U/mL, of standard bovine milk reconstituted using OP, at the concentrations of 20 mg extract/mL (A) and 40 mg extract/mL (B). Data are mean of three independent experiments (n = 3). Error bars correspond to standard error of mean. Items in figures 1A, 2A, and 3A with different letters (a-g) are significantly different (HSD test, P < 0.05). Items in figures 1B, 2B, and 3B with different letters (a-f) are significantly different (HSD test, P < 0.05).

**Figure 4.** Effect of the concentration of $CaCl_2$, expressed in mM, on the clotting activity (MCA), expressed in U/mL, of standard bovine milk reconstituted using OP, at the concentrations of 20 mg extract/mL (A) and 40 mg extract/mL (B). Data are mean of three independent experiments (n = 3). Error bars correspond to standard error of mean. Items in figures 1A, 2A, and 3A with different letters (a-t) are significantly different (HSD test, P < 0.05). Items in figure 1B, 2B, and 3B with different letters (a-o) are significantly different (HSD test, P < 0.05).

**Figure 5.** Effect of the time and the concentration of plant extract, 5 mg/ml (●), 10 mg/ml (■), 20 mg/ml (▲), 30 mg/ml (o), 40 mg/ml (□), on the proteolytic activity (PA), expressed in Uabs, using OP. Data are mean of three independent experiments (n = 3). Error bars correspond to standard error of mean.

**Figure 6.** Proteolytic activity (PA) of OP, expressed in Uabs, at the concentrations of 20 mg extract/mL (A) and 40 mg extract/mL (B). Data are mean of three independent experiments (n = 3). Error bars correspond to standard error of mean. Items in figure A with different letters (a-k) are significantly different (HSD test, P < 0.05). Items in figure B with different letters (a-m) are significantly different (HSD test, P < 0.05).

**Figure 7.** Standardized quantification of peptide precursors ($\times 10^3$) in bovine casein hydrolysates samples of obtained with the plant extract of the invention.

**Figure 8.** Flow-chart of the cheese making process.

## Examples

### Materials and Methods

*Lyophilised enzymatic extract preparation*

*Onopordum nervosum* ssp *platylepis* Murb (OP) (Sousse, Tunisia, Africa) is the thistle species used for the preparation of the plant extract. This extract were freeze-dried following the procedure described by Tejada, L., & Fernández-Salguero, J. (2003). Chemical and microbiological characteristics of ewe milk cheese (Los Pedroches) made

with a powdered vegetable coagulant or calf rennet. Italian Journal of Food Science. 15(1), 125-131. The plant material, styles, and stigmas were macerated in distilled water for 24 h at 25 °C in a 1:10 (*w*/*v*) ratio. The aqueous extract obtained was sieved, and the filtrate was centrifuged at 3,000x g for 5 min. The supernatant obtained was filtered with Whatman No. 1 paper. The filtrate obtained was frozen at -32 °C for 24 h and then lyophilized (Alpha 1-2LD plus, Christ, Osterode am Harz, Germany) at a working pressure between 4 and 13 Pa. The lyophilized powder was hermetically packed and frozen at -20 °C until its use.

The lyophilized plant extract was dissolved in water at several concentrations and then the aqueous plant extract is mixed with milk in range about 1:10 aqueous plant extract:milk. Thus, unless otherwise indicated, in the examples and the figures of the patent application plant extract concentration relates to aqueous plant extract concentration before mixing with milk.

*Characterisation of thistle extract: Total protein content*

The total protein of OP was determined according to the Bradford method using the Sigma (Sigma-Aldrich, Milan, Italy) ready to use reagent, although any other method known in the art for protein quantification is also suitable. For calibration, a set of bovine serum albumin (Merck, KGa, Darmstadt, Germany) solutions (0.1-1 mg/ml) was used. Absorbance readings at 595 nm were carried out using a UV-1800 Shimadzu (Kyoto, Japan) spectrophotometer. The protein content was determined in triplicate.

*Characterisation of thistle extract: Milk clotting activity* assay

The extract milk clotting activity (MCA) was evaluated according to the International Dairy Federation (IDF) (IDF, 1992) based on the visual evaluation of the first clotting flakes' appearance. For the clotting activity determination, 10 mL of reconstituted skimmed milk powder (0.12 Kg/L) was transferred into a clean and dry test tube. A calcium chloride solution was added (Sigma-Aldrich, Milan, Italy). The assay tube was allowed to equilibrate for 5 min at the desired temperature in an M20 thermostatic water bath (Lauda-Konigshofen, Germany) before adding the plant extract. After the temperature was reached, 1 mL of the plant extract was added. The time from the addition of enzyme to the first visual of solid material was measured in seconds, as clotting. One unit of clotting activity is defined as the volume of milk that can be clotted by one volume unit of plant extract in 40 minutes under define temperature, pH, and $CaCl_2$ test conditions *(Mozzon, 2020)* and was calculated with equation:

$$\mathbf{MCA\ (U/mL) = (2400 \times M) / (T \times V)}$$

Where **M** is the volume of milk (mL); **T** is the clotting time in seconds; and **V** is the volume of the enzyme (mL)

The effect of four independent variables were studied [plant extract concentration (5-40 mg/ml), temperature (20-85 °C), pH (5-8), and $CaCl_2$ concentration (5-70 mM)] on the milk clotting activity. The clotting activity of the extract was determined in triplicate.

To measure the effect of plant extract concentration (5, 10, 20, 30 and 40 mg/ml), the conditions of temperature (32°C), pH (6.2), and $CaCl_2$ concentration (10 mM) were set.

The effect of temperature (20, 25, 30, 35, 40, 45, 50, 60, 70, 80, and 85 °C), pH (5, 5.5, 6, 6.5, 7, 7.5 and 8) and $CaCl_2$ concentration (5, 10, 15, 20, 30, 50, 50, 60 and 70 mM) variables were measured at two extract concentrations (20 and 40 mg/ml).

*Milk clotting activity assay by response surface methodology:*

The variables studied (Temperature, pH, $CaCl_2$ and plant extract concentration) were optimized by conducting the statistically designed experiments, estimating the coefficients of the structured mathematical model, and checking the prediction of the responses and the adequacy of the model.

The design matrix consists of twelve experiments to study the simultaneous effects of three-level discrete variables, Temperature (30, 33 and 36 °C), pH (5.5, 6.0 and 6.5), and $CaCl_2$ concentration (2, 4 and 6 mM). The order of the experiments was completely randomized. Each experiment was carried out in double, and the results were compared with the predicted responses, as shown in Table 6, to confirm the validity of the RSM model. The D-optimal criterion was used to minimize the determinant of the variance matrix of the regression parameters.

For clotting tests, milk powders were re-dissolved in buffer solutions at different Calcium chloride concentration (2, 4 and 6 mM) and pH (5.5, 6.0, and 6.5), based on their dry matter contents which were 17.59 and 11.93% w/w for ewe's and goat's milk, respectively. The pH was adjusted to the desired value by the addition of lactic acid. A test tube containing 10 mL of reconstituted milk was previously thermostated in a M20 model water bath (Lauda GmbH, Konigshofen, Germany). Finally, 1 mL of reconstituted OP extract at a concentration of 20mg/ml were added to the mixture and the time needed for first flocks appeared (milk clotting time, MCT) on the tube wall was recorded.

JMP Software Version 17.0 (SAS Institute Inc., Cary, NC, USA) was used to investigate three different parameters (Temperature, pH, and concentration of $CaCl_2$) affecting the total milk clotting activity. In order to conduct the experimental design and statistical analysis, the Response surface methodology (RSM) was used.

A second-order polynomial equation was chosen to select the optimal levels of three variables using the standard least squares regression methodology to estimate the parameters of the mathematical model. The quality of fit of the polynomial model equation was expressed by a coefficient of determination, $R^2$. Analysis of variance (ANOVA) was performed to assess the statistical significance of the model.

*Characterisation of thistle extract: Proteolytic activity*

The proteolytic activity of the extract was determined following the method employed by Silva, S. V., & Malcata, F. X. (2005). Studies pertaining to coagulant and proteolytic activities of plant proteases from Cynara cardunculus. Food Chemistry. 89(1), 19-26. https://doi.org/10.1016/j.foodchem.2004.01.074. The substrate used was bovine milk casein-free of carbohydrates and fatty acids (Calbiochem, Darmstadt, Germany) at 1% (*w/v*) in 10 mM citrate buffer (pH 6.2) (Sigma-Aldrich, St. Louis, Missouri, USA) with 0.03% (*w/v*) sodium azide (Fisher Scientific, Madrid, Spain) to avoid microbial growth, and incubated in a bath at 32 °C. Hydrolysis was started by adding 0.12 mL of reconstituted extract at different concentrations (5, 10, 20, 30 and 40 extract/mL) to 3 mL of casein solution. Subsequently, 0.5 mL aliquots at different times (5, 10, 20, 30, 40, 50 and 60 min) were taken in Eppendorf tubes. The enzymatic reaction was inactivated at 100 °C for 5 min, and the proteolytic activity was quantified by evaluation of the peptides soluble in aqueous 5% (w/v) trichloroacetic acid (TCA) (Sigma-Aldrich, St. Louis, Missouri, USA). For this, 1 mL of 5% TCA (*w/v*) was added to each tube and incubated for 10 min at 25 °C, and centrifuged at 12,000x g for 10 min, while the absorbance of the supernatant was measured at 280 nm in a quartz cuvette. All determinations were made in triplicate.

*Statistical analysis*

All experiments were conducted in triplicate, and the results were expressed with the mean and standard error. All statistical analysis of different parameters was computed using the SPSS version 21.0 software package (IBM Corporation, Armonk, NY, USA). In order to assess differences between the species, one-way analysis of variance (ANOVA) was applied to mineral composition. Regarding the MCA analysis, two-way ANOVA was performed to study the influence of temperature, pH, and $CaCl_2$ concentration. For PA, multivariate analysis of variance (MANOVA) was applied to analyze the effect of the species, time, and the concentration of plant extract. Fisher's test ($p < 0.05$) was performed to determine significant differences between treatment groups. Relationships among studied factors were presented using appropriate curves and tables.

**Results**

*Total Protein content*

The protein content of the extract OP was 0.0764 ± 0.0011 (mean ± standard error) mg protein/mg extract.

*Milk clotting activity assay*

The milk coagulation times (MCT) for each of the variables studied at the different extract concentrations are given in Table 1 for the plant extract concentration, Table 2 for temperature and Table 3 for pH.

**Table 1.** Milk clotting time (seconds) for milk coagulation of vegetable coagulants from OP at different extract concentrations

| [Extract] (mg/ml) | MCT (s) [1] |
|---|---|
| | OP |
| 5 | 1129 |
| 10 | 737 |
| 20 | 380 |
| 30 | 244 |

(continued)

| [Extract] (mg/ml) | MCT (s) [1] |
|---|---|
| | OP |
| 40 | 196 |

[1]Average values of three replicates.
[Extract] = extract concentration, MCT = milk clotting time

**Table 2.** Effect of temperature (°C) on the MCT (seconds) of the OP plant extracts at different extract concentrations (mg/ml)

| [Extract] (mg/ml) | T (°C) | MCT (s) [1] |
|---|---|---|
| | | OP |
| **20** | 20 | 1404 |
| | 25 | 665 |
| | 30 | 387 |
| | 35 | 266 |
| | 40 | 150 |
| | 45 | 105 |
| | 50 | 53 |
| | 60 | 35 |
| | 70 | 20 |
| | 80 | 24 |
| | 85 | 120 |
| **40** | 20 | 810 |
| | 25 | 379 |
| | 30 | 230 |
| | 35 | 157 |
| | 40 | 95 |
| | 45 | 50 |
| | 50 | 38 |
| | 60 | 12 |
| | 70 | 6 |
| | 80 | 3605 |
| | 85 | 4306 |

[1]Average values of three replicates.
[Extract] = extract concentration, T = temperature, MCT = milk clotting time

**Table 3.** Effect of the pH on the MCT (seconds) of the OP plant extracts at different extract concentrations (mg/ml)

| [Extract] (mg/ml) | pH | MCT (s) [1] |
|---|---|---|
| | | OP |
| **20** | 5 | 271 |
| | 5.5 | 257 |
| | 6 | 294 |
| | 6.5 | 295 |
| | 7 | 297 |
| | 7.5 | 312 |
| | 8 | 327 |
| **40** | 5 | 192 |
| | 5.5 | 172 |
| | 6 | 185 |
| | 6.5 | 190 |
| | 7 | 195 |
| | 7.5 | 195 |
| | 8 | 215 |

[1]Average values of three replicates.
[Extract] = extract concentration, MCT = milk clotting time

*Effect of species and extract concentration*

The effect of the concentration (about 5 to about 40 mg/ml) of OP extract on the clotting activity in milk at about pH 6.2 and a $CaCl_2$ concentration of about 10 mM is shown in Figure 1.

The milk clotting activity depends on the concentration of the enzyme. In this study, the MCA value increases with increasing extract concentration ($p< 0.001$);

Considering the clotting activity among the extract concentration, 40 mg/ml was the optimum concentration to reach the maximum MCA values ($p < 0.001$).

As coagulation of casein micelles does not occur until after extensive proteolysis of the surface κ-casein necessary to produce aggregatable particles, it is probable that the reduced milk clotting capacity of some *Onopordum* species proteases is due to their reduced ability to hydrolyse κ-caseins.

*Effect of species and temperature*

The effect of temperature on the clotting activity of the OP plant extract on milk at pH 6.2 and $CaCl_2$ concentration of 10 mM was evaluated at temperatures between 20 and 85 °C, and at different extract concentrations (20 and 40 mg/ml). The significant differences in the effect of temperature on the MCA of the extracts are shown in Table 4.

**Table 4:** Significant differences (P-value) of the interaction between the plant extract concentration and milk clotting activity (MCA) of the OP extracts

| Variable | P-value[1] |
|---|---|
| Species x extract concentration | < 0.001 |

The concentrations of enzyme extract used were 5, 10, 20, 30, and 40 mg/ml
[1]The means of the different extract concentrations (5, 10, 20, 30 and 40 mg extract/mL) were analyzed using two-way ANOVA at a significance level of $P < 0.05$

The clotting activity of the plant extract increased with temperature, with higher coagulation developing at 70 °C in all cases. Similarly, the milk clotting activity was influenced by the concentration of extract used, as the 20 mg/ml concentration showed lower MCA values compared to the 40 mg/ml extract concentration (Figure 2).

Therefore, the clotting capacity of the OP extract was much more favoured by an increase in temperature. Thus, at a temperature of 70 °C, OP [40 mg/ml] was the extract that significantly increased ($p < 0.001$) its clotting activity the most compared to the MCA values obtained for the 20 mg/ml concentration at the same temperature.

By contrast, at temperatures above 70°C, the milk clotting activity of the plant extract was found to decrease, indicating denaturation of the enzymes.

The plant extract of the present invention comprises clearly thermophilic enzymes, whose clotting activity increased with temperature to relatively high values.

*Effect of species and pH*

Figure 3 shows the influence of pH on the clotting activity of OP plant extract, at concentrations of 20 and 40 mg extract/mL, on milk at 32 °C and $CaCL_2$ concentration of 10 mM. The significant differences in the effect of pH on the MCA of the extract are shown in Table 2.

It was observed that the clotting activity of the OP extract responds to a wide range of pH values (5.0-8.0), the optimum for coagulation being between 5.0 and 5.5. More specifically, OP presented a maximum MCA at an extract concentration of 40 mg/ml and a pH 5.5 As the pH of the milk was increased, the clotting activity of the extract was observed to decrease drastically at both extract concentrations studied. The concentration of extract used had an influence on the MCA, which was more significant at higher concentrations.

*Effect of species and $CaCl_2$*

The effect of adding $CaCl_2$ at different concentrations (5, 10, 15, 20, 30, 40, 50, 60 and 70 mM) on milk at a temperature of 32 °C and a pH of 6.2 is shown in Figure 4. The significant differences in the effect of $CaCl_2$ on the MCA of the extract are shown in Table 2.

For this purpose, OP plant enzyme extract were used at concentrations of 20 and 40 mg/ml. An increase in MCA can be observed at higher $CaCl_2$ concentrations.

Taking the extract concentration into account, it can be seen that OP plant extract shows a higher activity at the 70mM concentration and 20 mg/ml, than at 40 mg/ml ($p < 0.001$).

These results indicate that the addition of $CaCl_2$ significantly improves the clotting activity of the enzyme extract.

In the first phase of the coagulation process, once most of the $Phenylalanine_{105}$-$Methionine_{106}$ bonds have been cleaved, $Ca^{+2}$ ions combine with para-kappa casein fractions to form firm clots. For this reason, some authors suggest that the addition of calcium chloride to milk reduces the coagulation time and allows the aggregation of casein micelles, increasing the firmness of the curd (Mozzon et al., 2020).

The significant differences in the effect of temperature, pH, and $CaCl_2$ on the MCA of the plant extract at 20 and 40 mg/ml concentrations are shown in Table 5.

**Table 5.** Significant differences (P-value) of the interaction between the variables of temperature, pH, $CaCl_2$ concentration and milk clotting activity (MCA) of the OP plant extract at 20 mg/ml and 40 mg/ml concentrations

| Variable | P-value[3] | |
|---|---|---|
| | [20 mg/ml][1] | [40 mg/ml][2] |
| Temperature | < 0.001 | < 0.001 |
| Species x temperature | < 0.001 | < 0.001 |
| pH | < 0.001 | < 0.001 |
| Species x pH | < 0.001 | < 0.001 |
| [$CaCl_2$] | < 0.001 | < 0.001 |
| Species x [$CaCl_2$] | < 0.001 | < 0.001 |

1 extract concentration 20 mg/ml
2 extract concentration 40 mg/ml
3The means of the different extract concentrations (20 mg/ml and 40 mg/ml) were analyzed using two-way ANOVA at a significance level of $P < 0.05$

*Predicted model equations for Milk Clotting Time (MCT)*

The time from the addition of enzyme to the first visual of solid material was measured in seconds, as clotting, results are shown in Table 6.

**Table 6.** Milk clotting time (MCT) in seconds resulting from the interaction between the variables of temperature, pH and $CaCl_2$ concentration of *Onopordum nervosum ssp platylepis Murb* extract in goat and ewe milk.

| Run | Temperature (°C) | pH | [$CaCl_2$] (mM) | Ewe's milk | Goat's milk |
|---|---|---|---|---|---|
| 1 | 33 | 5.5 | 6 | 729.5 | 779.5 |
| 2 | 36 | 5.5 | 2 | 1101 | 1227.5 |
| 3 | 36 | 6.5 | 6 | 582.5 | 619.5 |
| 4 | 30 | 6 | 4 | 1449 | 1556.5 |
| 5 | 33 | 6.5 | 4 | 1067 | 1148 |
| 6 | 30 | 6.5 | 2 | 1652 | 1849.5 |
| 7 | 30 | 5.5 | 6 | 963 | 986.5 |
| 8 | 33 | 6 | 2 | 1403.5 | 1444 |
| 9 | 30 | 6.5 | 6 | 1028 | 1105.5 |
| 10 | 36 | 5.5 | 6 | 673.5 | 674.5 |
| 11 | 36 | 6.5 | 2 | 987 | 992 |
| 12 | 30 | 5.5 | 2 | 1924.5 | 1878 |

One unit of clotting activity is defined as the volume of milk that can be clotted by one volume unit of plant extract in 40 minutes under define temperature, pH, and $CaCl_2$ test conditions and was calculated with equation:

$$\text{MCA (U/mL)} = (2400 \times M) / (T \times V)$$

Where M is the volume of milk (mL); T is the clotting time in seconds; and V is the volume of the enzyme (mL)

By using the above mentioned formula, the MCA value of *Onopordum nervosum ssp platylepis Murb* extract in 10 ml of milk from different origins was calculated as can be seen in Table 7.

**Table 7.** Milk clotting activity (MCA) from the interaction between the variables of temperature, pH and $CaCl_2$ concentration of *Onopordum nervosum ssp platylepis Murb* extract in goat and ewe milk.

| Run | Temperature (°C) | pH | [$CaCl_2$] (mM) | Ewe's milk | Goat's milk |
|---|---|---|---|---|---|
| 1 | 33 | 5.5 | 6 | 32.8993 | 30.7890 |
| 2 | 36 | 5.5 | 2 | 21.7984 | 19.5519 |
| 3 | 36 | 6.5 | 6 | 41.2017 | 38.7409 |
| 4 | 30 | 6 | 4 | 16.5632 | 15.4192 |
| 5 | 33 | 6.5 | 4 | 22.4930 | 20.9059 |
| 6 | 30 | 6.5 | 2 | 14.5279 | 12.9765 |
| 7 | 30 | 5.5 | 6 | 24.9221 | 24.3284 |
| 8 | 33 | 6 | 2 | 17.1001 | 16.6205 |
| 9 | 30 | 6.5 | 6 | 23.3463 | 21.7096 |
| 10 | 36 | 5.5 | 6 | 35.6347 | 35.5819 |
| 11 | 36 | 6.5 | 2 | 24.3161 | 24.1936 |

(continued)

| Run | Temperature (°C) | pH | [$CaCl_2$] (mM) | Ewe's milk | Goat's milk |
|---|---|---|---|---|---|
| 12 | 30 | 5.5 | 2 | 12.4708 | 12.7796 |

As shown in table 8, the second-order polynomial model was significant for both types of milk. Moreover, the clotting properties of *Onopordum nervosum ssp platylepis Murb* were strongly affected by temperature, pH and Ca ion concentration in both types of milk studied. Interactions among factors T*Ca and pH*Ca were significant in both types of milk; on the other hand, the interaction between T*pH was significant only for goat's milk. Therefore, we can state that the effect of temperature and $CaCl_2$ is greater or affects the coagulation time (MCT) more strongly than pH.

**Table 8.** Estimated coefficients of the predicted second-order polynomial model for the milk clotting activity of *Onopordum nervosum ssp platylepis Murb*. extract.

| Term | Ewe's milk | | Goat's milk | |
|---|---|---|---|---|
| | **Estimates** | **p-Value** | Estimates | **p-Value** |
| **Intercept** | 1130.07 | <.0001 | 1201.95 | <0.0001 |
| **Linear** | | | | |
| Temperature | -276.53 | <.0001 | -288.7 | <0.0001 |
| pH | -47.35 | 0.0035 | -26.35 | 0.0138 |
| $CaCl_2$ | -306.40 | <.0001 | -318.775 | <0.0001 |
| **Quadratic** | | | | |
| T x T | 53.63 | 0.0884 | 62.25 | 0.0085 |
| pH x pH | -26.96 | 0.4784 | -24 | 0.3665 |
| Ca x Ca | -44.21 | 0.2521 | -73.125 | 0.013 |
| **Interactions** | | | | |
| T x pH | 0.3125 | 0.9829 | -47.625 | 0.0003 |
| T x Ca | 94.19 | <.0001 | 88.75 | <0.0001 |
| pH x Ca | 47.87 | 0.0041 | 40.1 | 0.0041 |

In Table 9, the independent factors were analyzed by using the desirability function of the JMP Software to estimate the best conditions for minimizing the clotting time.

**Table 9.** Operative conditions for the best clotting performance of *Onopordum nervosum ssp platylepis Murb.*

| Type of milk | Optimal T | Optimal pH | Optimal Ca | Predicted MCT | Desiderability | Measured MCT |
|---|---|---|---|---|---|---|
| Ewe's milk | 36 | 5.5 | 6 | 622.95 | 0.907984 | 673.5 |
| Goat's milk | 36 | 6.5 | 6 | 614.5 | 0.939395 | 619.5 |

In all the milk/coagulant systems, the optimal temperature and Ca ion concentration for clotting were the highest 36 °C and 6mM, respectively, in the range explored. For the ewe's milk, the optimal pH value (5.5) was the lowest in the studied range (5.5-6.5), while in the case of goat's milk, the optimal pH value (6.5) was the highest.

The following table (Table 10) shows the algorithms (second-order equation) for predicting the optimal levels of the three variables, temperature, pH, and $CaCl_2$ required to achieve a reduced clotting time.

On the other hand, with the same algorithm, the optimal level of one of the variables can be defined by setting the desired coagulation time and the rest of the conditions.

**Table 10.** Models for the milk clotting time

| | MCT[1] | R2 | Adjusted R2 | p-value |
|---|---|---|---|---|
| Ewe's milk | 11045.56875 +(-870.0414063*[$CaCl_2$]) +(1001.065625*pH) +(-549.5265625*Temperature) +(-11.05265625*[$CaCl_2$]$^2$) +(-107.84375*pH$^2$) +(5.9592013889*Temperature$^2$) +(47.871875*[$CaCl_2$] *pH) +(15.697916667*[$CaCl_2$]*Temperatur e) + (0.2083333*pH*Temperature) | 0.9874 | 0.9793 | <. 0001* |
| Goat's milk | 5743.55 +(-741.8625*[$CaCl_2$]) +1986.65*Ph +(-421.4*Temperature) +(-18.28125*[$CaCl_2$]$^2$) +(-96*pH$^2$) +6.9166666667*Temperature$^2$) +40.1*[$CaCl_2$]*pH +14.791666667*[$CaCl_2$]*Temperatur e +(-31.75*pH*Temperature) | 0.9944 | 0.9908 | <. 0001* |
| [1]Each model equation is presented using the significant experimental values ($p < 0.05$). *Level of significance $p < 0.05$. Temperature is measured in °C and $CaCl_2$ concentration in mM | | | | |

The quality of the fit to the polynomial models were checked by the regression coefficient $R^2$, which measures the amount of total variability explained by the model, and the adjusted $R^2$, which shows the percentage of variation explained by only the independent variables (T, pH, concentration of calcium chloride) that significantly affect the dependent variable (MCT) (Table 10). The good agreement between $R^2$ and adjusted $R^2$ (<0.0001) indicated the high adequacy of the models for describing the behavior of the milk clotting activity in different conditions of temperature, pH, and Ca ion level in both types of milk.

*Proteolytic activity*

As indicated previously, the proteolytic activity is highly relevant for obtaining foods containing potentially bioactive peptides and for obtaining peptide hydrolysates as ingredients to enrich and develop functional foods.

The proteolytic activity and the reaction time (5, 10, 20, 30, 40, 50 and 60 min) for each of the extract concentrations used (5, 10, 20, 30 and 40 mg extract/mL) are shown in Figure 5. Table 11 shows the significant differences in the proteolytic activity of the OP plant extract at the concentrations studied at the different reaction times. The equations and coefficients of determination ($R^2$) for polynomial trend of the proteolytic activity on bovine casein of the plant extract at different concentrations are shown in Table 12.

**Table 11.** Significant differences (P-value) of the interaction between the variables of time, plant extract concentration, and proteolytic activity (PA) of the OP plant extract.

| Variable | P-value[1] |
|---|---|
| Time | < 0.001 |
| Extract concentration | < 0.001 |
| Time × Extract concentration | < 0.001 |
| The plant extract concentrations used were 5, 10, 20, 30, and 40 mg/ml<br>[1]The means of the different extract concentrations (5, 10, 20, 30 and 40 mg/ml) were analyzed using multifactorial ANOVA at a significance level of $P < 0.05$ | |

**Table 12.** Equations and coefficients of determination ($R^2$) for polynomial trend of the proteolytic activity of OP plant extract at different extract concentrations on bovine casein.

(continued)

| OP | | |
|---|---|---|
| [extract][1] | Equation of the line | $R^2$ |
| 5 mg/mL | $y = -1E-05x^2+0.0011x+0.2597$ | 0.7419 |
| 10 mg/mL | $Y = -2E-05x^2+0.0016x+0.3002$ | 0.62 |
| 20 mg/mL | $Y = 2E-05x^2-0.0002x+0.3895$ | 0.9768 |
| 30 mg/mL | $Y = -2E-05x^2+0.0032x+0.426$ | 0.9686 |
| 40 mg/mL | $Y = -0.0001x^2+0.009x+0.7283$ | 0.7863 |

**1** plant extract concentration Values and significant differences in proteolytic activity between the concentrations of plant extracts, and all reaction times studied are given in tables 13 and 14.

**Table 13.** Reaction times (minutes) on the proteolytic activity (Uabs) of OP plant extracts at different extract concentrations (mg/ml).

| **[Extract]** | **Time** | **PA (Uabs 280 nm)[1]** |
|---|---|---|
| | | **OP** |
| **5** | 5 | 0.2632[l] |
| | 10 | 0.2732[kl] |
| | 20 | 0.2760[kl] |
| | 30 | 0.2841[jk] |
| | 40 | 0.2793[k] |
| | 50 | 0.2971[j] |
| | 60 | 0.2832[jk] |
| **10** | 5 | 0.3124[j] |
| | 10 | 0.3125[j] |
| | 20 | 0.3171[j] |
| | 30 | 0.3248[ij] |
| | 40 | 0.3342[i] |
| | 50 | 0.3397[i] |
| | 60 | 0.3148[j] |
| **20** | 5 | 0.3892[l] |
| | 10 | 0.3907[l] |
| | 20 | 0.3941[l] |
| | 30 | 0.4092[kl] |
| | 40 | 0.4129[kl] |
| | 50 | 0.4454[jk] |
| | 60 | 0.4608[j] |

(continued)

| [Extract] | Time | PA (Uabs 280 nm)[1] |
|---|---|---|
| | | OP |
| 30 | 5 | 0.4352[n] |
| | 10 | 0.4638[mn] |
| | 20 | 0.4765[lm] |
| | 30 | 0.5037[kl] |
| | 40 | 0.5053[kl] |
| | 50 | 0.5264[jk] |
| | 60 | 0.5274[jk] |
| 40 | 5 | 0.7881[jk] |
| | 10 | 0.8010[jk] |
| | 20 | 0.8159[ij] |
| | 30 | 0.8706[h] |
| | 40 | 0.7600[k] |
| | 50 | 0.8889[h] |
| | 60 | 0.8546[hi] |
| different superscript letters mean significant differences (LSD test, $p < 0.05$). Data are mean of three experiments. [Extract] = extract concentration, PA = proteolytic activity | | |

**Table 14.** Proteolytic activity (Uabs) of OP plant extracts at different reaction times (minutes) and concentrations.

| Time | [Extract] | PA (Uabs 280 nm)[1] |
|---|---|---|
| | | OP |
| 5 | 5 | 0.2632[j] |
| | 10 | 0.3124[i] |
| | 20 | 0.3892[h] |
| | 30 | 0.4352[g] |
| | 40 | 0.7881[b] |
| 10 | 5 | 0.2732[m] |
| | 10 | 0.3125[l] |
| | 20 | 0.3907[j] |
| | 30 | 0.4638[g] |
| | 40 | 0.8010[c] |
| 20 | 5 | 0.2760[k] |
| | 10 | 0.3171[j] |
| | 20 | 0.3941[h] |
| | 30 | 0.4765[f] |
| | 40[a] | 0.8159[c] |

(continued)

| Time | [Extract] | PA (Uabs 280 nm)[1] |
|---|---|---|
| | | OP |
| 30 | 5 | $0.2841^{k}$ |
| | 10 | $0.3248^{j}$ |
| | 20 | $0.4092^{hi}$ |
| | 30 | $0.5037^{f}$ |
| | 40 | $0.8706^{c}$ |
| 40 | 5 | $0.2793^{m}$ |
| | 10 | $0.3342^{l}$ |
| | 20 | $0.4129^{jk}$ |
| | 30 | $0.5053^{h}$ |
| | 40 | $0.7600^{e}$ |
| 50 | 5 | $0.2971^{m}$ |
| | 10 | $0.3397^{l}$ |
| | 20 | $0.4454^{j}$ |
| | 30 | $0.5264^{h}$ |
| | 40 | $0.8889^{d}$ |
| 60 | 5 | $0.2832^{k}$ |
| | 10 | $0.3148^{k}$ |
| | 20 | $0.4608^{i}$ |
| | 30 | $0.5274^{h}$ |
| | 40 | $0.8546^{e}$ |

[1]Different superscript letters mean significant differences (LSD test, $p < 0.05$). Data are mean of three experiments. [Extract] = extract concentration, PA = proteolytic activity

As is observed in Figure 5, the concentration of 40 mg/ml was the one at which OP showed the highest PA ($p < 0.001$). Its highest proteolytic activity at the concentration of 40 mg/ml at 30 min of hydrolysis, while at the end of the reaction (60 min) its activity was decreased ($p <0.001$).

The significant differences observed between different extract concentrations of 20 and 40 mg/ml can be seen in Figure 6.

The enzymatic composition of *Onopordum nervosum* ssp *platylepis* Murb and the specificity of its component proteases are unknown.

A balanced degradation of caseins is necessary for the development of favorable organoleptic characteristics in cheese.

**Bioactivity of peptides present in casein hydrolysates produced from *Onopordum platylepis.***

Casein hydrolysates were produced by preparing a 1% (w/v) solution of bovine casein in distilled water and adjusting the pH to 6.2 with NaOH. Citrate buffer and sodium azide were not used in the preparation of the hydrolysates to avoid interference in the subsequent peptide activity assays. The hydrolysis reaction was carried out in falcon tubes with a volume of 9 mL of substrate solution immersed in a water bath at 50°C with stirring. Once this temperature was reached inside the tube, 360 μL of the reconstituted lyophilised extract of OP were added at a concentration of 0.6 mg/mL. The reaction was stopped after 16 hours, and the pH was adjusted to 4.6 with HCl. Subsequently, the hydrolysate

was centrifuged at 4000 g for 20 minutes, the supernatant was collected and filtered through 0.45 μm nylon filter using kitasate and vacuum pump. Finally, the filtered hydrolysate was pH adjusted to 7 with NaOH and distributed into falcon tubes for storage at -20°C until use.

The peptides present in the hydrolysates were sequenced by LC-MS/MS analysis following standard protocols in the field. To verify the bioactivity of the peptide sequences identified in the different casein hydrolysates, these sequences were searched in the BIOPEP database. As results, 2 types of biopeptides were detected: those in their bioactive form in the casein hydrolysates; and potential ones, which contain bioactive sequences within their primary structure. A total of 5 peptides with potential bioactivity were identified (table 15).

**Table 15.** Peptide sequences identified in bovine casein hydrolysates from *O. platylepis* proteases that were registered in the bioactive peptide database (BIOPEP).

| Sequence | ID | Name | Chem. mass | IC50 (μM) | Activity |
|---|---|---|---|---|---|
| LLYQEPVLGPVRG PFPIIV | 8174 | peptide derived from bovine b-casein (1-28) | 2107.529 5 | - | immunomodulat ing |
| RPKHPIKHQGLPQE VLNENLLRF | 9530 | Isracidin - antiviral | 2764.183 3 | - | antiviral |
| SQSKVLPVPQKAV PYPQ | 9907 | Antioxidativ e peptide | 1866.159 2 | - | antioxidative |
| VYQHQKAMKPWIQ PKTKVIPYVRYL | 5469 | (fr. 183-207) of bovine alpha s2-casein | 3115.728 0 | - | antibacterial |
| YQKFPQY | 9254 | ACE inhibitor | 973.0790 | 20.0 8 | ACE inhibitor |
| ACE = angiotensin-I converting enzyme. | | | | | |

The quantification of potential bioactive peptides in bovine casein total hydrolysates was performed using a O. *platylepis* water-soluble extract, considering their peptide spectral matches (PSM) in liquid chromatography-mass spectrometry and taking into account the presence of demonstrated bioactive sequences in their primary structure. The identified peptides and their respective quantification for each sample were extracted. The quantification values were normalized according to the total PSM of all peptides in the samples. In this way, quantification of the same peptide between samples was comparable.

The results of the peptides identified that have potential bioactivity because of containing bioactive sequences within their primary structures show that O. platylepis casein hydrolysates showed great potential as a source of this type of precursor (Figure 7). Exerting for example, potential antidiabetic, antifungal, inmunostimulating and immunomodulating, antithrombotic, and inhibitory insuline secretion activities.

**Production of Caciofiore cheese using *Onopordum tauricum* and *Onopordum platylepis***

Two batches of each experimental cheeses coagulated with the freeze-dried extracts from the species *Onopordum tauricum* (OT) and *Onopordum nervosum* ssp *platylepis* Murb (OP) were manufactured.

Raw milk obtained from Sopravissana ewes during one milking day was filtered and separated into two 20-L aliquots per batch. Two aliquots were coagulated with the reconstituted freeze dried extract from *Onopordum tauricum,* whereas other two aliquots were coagulated with the reconstituted freeze dried extract from *Onopordum platylepis.* For each aliquot, at least three cheese wheels were manufactured.

The cheese-making process used for production of the cheese wheels is summarized in the flow chart of Fig 8.

Briefly, plant extracts (plant coagulants) were added to raw milk pre-heated at 35 °C and gently stirred. After clotting (ca. 40'), using the conditions of T°, pH, $CaCl_2$ described herein, the curds were manually broken using a wooden tool into rice-sized grains, transferred into plastic perforated molds (8-10 cm diameter) and manually pressed to remove the whey. Molded cheeses were held at 12-13 °C for 4 h, dry salted and ripened for 60 days under controlled conditions

(12-13 °C and 70% relative humidity).

The ripening of cheeses is a complex process that involves proteolysis and fat degradation. Proteolysis, the most important process in cheese ripening, is a major factor in the development of flavor and texture during the ripening of cheese and the availability of flavor precursors in all ripened cheeses. The products of proteolysis, AA and peptides, are in the nonvolatile water-soluble fraction, which contributes to the most intensity of cheese flavor. Textural changes in cheese are also related to protein breakdown. However, detailed knowledge of proteolysis products and of their role in cheese maturation is incomplete. During the last decade, HPLC has been used to study the proteolysis of cheese. Its versatility, short analysis time, effective separation, and high resolution have made HPLC one of the basic techniques employed in separation and characterization of proteolytic products, especially peptides. In the present experiment the peptides of the water-soluble N (WSN) fraction of cheese were resolved by HPLC.

The physical-chemical analysis of cheeses made with Onopordum *platylepis* and Onopordum *tauricum* are shown in Table 16

**Table 16:** physical-chemical analysis of cheeses

| | Onoprodum *tauricum* | Onopordum *platylepis* |
|---|---|---|
| Dry extract[1] | 70.3799 | 67.6087 |
| Ashes[2] | 7.68 | 8.2632 |
| Fat[2] | 48.4315 | 40.7505 |
| Protein[2] | 42.5175 | 46.5594 |
| Salt[1] | 2.05 | 4.5 |

1 per 100 g cheese
2 per 100 g of dry extract

As it can be observed, the cheese produced with OP as milk coagulant has lees fat content and higher protein content. Therefore, obtaining a healthier cheese.

Furthermore, nitrogen fractions of cheeses curdled with *Onopordum platylepis* and *Onopordum tauricum.* Are shown in Table 17

**Table 17.** Nitrogen Fractions

| | Onopordum *tauricum* | Onopordum *platylepis* |
|---|---|---|
| TN | 4.6904 | 4.9336 |
| SN | 0.7175 | 1.3817 |
| NPN | 0.4426 | 0.6564 |

1 per 100 g cheese
TN: Total Nitrogen; SN: Soluble Nitrogen; NPN: Non Proteic Nitrogen

The type of plant extract used as coagulant modified the TN, SN, and NPN content of the cheeses. These percentages were higher in cheeses made with *Onopordum platylepis* compared to cheeses made with *Onopordum taurieum.* This data further strengths the different behavior of both plant extracts.

The ratio between hydrophobic (HO) and hydrophilic (HI) peptides is relevant for the study the proteolysis of cheeses, as each type of cheese has a typical peptide profile. To determine the portions where the hydrophilic and hydrophobic peptides will appear, the same procedure was used as in Dolores Gonzalez De Llano, M. Carmen Polo, Mercedes Ramos, Study of Proteolysis in Artisanal Cheeses: High Performance Liquid Chromatography of Peptides, Journal of Dairy Science, Volume 78, Issue 5, 1995, Pages 1018-1024, ISSN 0022-0302, https://doi.org/10.3168/jds.S0022-0302(95)76717-0.The times at which the amino acids tyrosine (Tyr) and tryptophan (Trp) are released were determined using external standards. The retention times are 4.7 minutes for Tyr and 19.4 minutes for Trp. Therefore, the HI peptide fraction is considered to be between 4.7 and 19.4 minutes and from the latter time until the end of the analysis the HO peptide fraction. Results are shown in Table 18

**Table 18.** Hydrophobic (HO) and hydrophilic (HI) peptide content of cheeses made from *Onopordum platylepis* and *Onopordum tauricum.*

| | **Onopordum *tauricum*** | **Onopordum *platylepis*** |
|---|---|---|
| HO | 57.4367 | 122.7747 |
| HI | 11.5096 | 6.3895 |
| %HO | 61.1157 | 83.1580 |
| %HI | 12.4142 | 4.3790 |
| HO+HI | 68.9463 | 129.1642 |
| HO/HI | 5.1137 | 19.0802 |

The results of Table 18 are expressed as chromatographic area units (HI: chromatographic area corresponding to the hydrophilic peptide fraction; HO: chromatographic area corresponding to the hydrophobic peptide fraction; %HO: percentage of chromatographic area corresponding to the hydrophobic peptide fraction; %HI: percentage of chromatographic area corresponding to the hydrophilic peptide fraction HO+HI: sum of the chromatographic areas corresponding to the hydrophobic and hydrophilic peptide fractions; HO/HI: ratio of hydrophobic to hydrophilic peptides).

As can be seen, both OT and OP plant extracts significantly affected the HI and HO content of the cheeses, with a higher concentration of HO peptides and HO/HI ratio in cheeses made with *Onopordum platylepis* compared to cheeses made with *Onopordum tauricum.* On the other hand, a higher concentration of HI peptides was observed in samples made with *Onopordum tauricum.* This data further strengths the different behavior of both plant extracts

Finally, DPPH radical scavenging activity (RSA) of peptides from the SN fraction of cheeses produced with *Onopordum platylepis* and *Onopordum tauricum* plant extracts is shown in Table 19

**Table 19.** DPPH radical scavenging activity in the cheeses

| | Onopordum *tauricum* | Onopordum *platylepis* |
|---|---|---|
| %RSA DPPH | 32.3003 | 53.105 |
| Peptides (mg/ml) | 5.3210 | 5.8770 |

Regarding the DPPH radical scavenging capacity, a concentration of 5.3210 mg/ml of peptides from the soluble nitrogen fraction of the cheese made with the *Onpordum tauricum* extract was necessary to achieve an uptake percentage of 32.3003%, while a concentration of 5.8770 mg/ml of peptides from the soluble nitrogen fraction of the cheese made with the *Onopordum platylepis* extract was necessary to achieve 53.105% DPPH uptake.

In summary these results evidence the antioxidant capacity of the functional foods produced by the clotting and proteolytic activity of *Onopordum nervosum* ssp *platylepis* Murb and its advantages compared to other plant extracts.

**List of sequences**

SEQ_ID No 1: LLYQEPVLGPVRGPFPIIV

SEQ_ID No 2: RPKHPIKHQGLPQEVLNENLLRF

SEQ_ID No 3: SQSKVLPVPQKAVPYPQ

SEQ_ID No 4: VYQHQKAMKPWIQPKTKVIPYVRYL

SEQ_ID No 5: YQKFPQY

**Claims**

1. A plant extract obtained from *Onopordum nervosum ssp platylepis Murb*

2. A method of enzymatic milk clotting comprising the following steps:

- providing the *Onopordum nervosum ssp platylepis Murb* plant extract according to any of the preceding claim
- putting in contact said plant extract with milk under the following conditions:

  ◦ A range of temperature from 20°C to 85°C
  ◦ A $CaCl_2$ concentration range from 2 mM to 70 mM
  ◦ A pH range from 3 to 8
  during the required time for the milk to be clotted, and

- collecting the clotted milk

**3.** The method according to the preceding claim, wherein the plant extract is in a concentration of between 0.01 mg/ml and 10 mg/ml of milk.

**4.** The method according to any of the preceding claims 2 to 3, wherein the temperature is between 60°C and 80°C.

**5.** The method according to any of the preceding claims 2 to 4, wherein the pH is between 5.2 and 7.

**6.** The method according to any of the preceding claims 2 to 5, wherein the milk is obtained from a goat, ewe, horse, camel and cow or mixtures thereof.

**7.** The method according to any of the preceding claims 2 to 6, wherein the milk is obtained from ewe, a parameter selected from temperature, $CaCl_2$, pH and time can be determined using the following model, before carrying out the method of claim 2:

$$MCT = 11045.57 + (-870.04 * [CaCl_2]) + (1001.07 * pH) + (-549.53 * Temperature) + (-11.05 * [CaCl_2]^2) + (-107.84 * pH^2) + (5.96 * Temperature^2) + (47.87 * [CaCl_2] * pH) + (15.70 * [CaCl_2] * Temperature) + (0.21 *pH * Temperature)$$

**8.** The method according to any of the preceding claims 2 to 7, wherein the milk is obtained from ewe and the temperature is 34°C to 38°C, the pH is 5.2 to 5.8, and $CaCl_2$ concentration is 4mM to 8mM

**9.** The method according to any of the preceding claims 2 to 6, wherein the milk is obtained from goat, a parameter selected from temperature, $CaCl_2$, pH and time can be determined using the following model, before carrying out the method of claim 2:

$$MCT= 5743.55 + (-741.86 * [ CaCl_2]) + 1986.65 * pH + ( -421.4 * Temperature) + (-18.28 * [CaCl_2]^2) + ( -96*pH^2) +6.92 * Temperature^2) + 40.1 * [CaCl_2] * pH + 14.79 * [CaCl_2] * Temperature + (-31.75 * pH * Temperature)$$

**10.** The method according to any of the preceding claims 2 to 6 and 9, wherein the milk is obtained from goat and the Temperature is 34°C to 38°C, the pH is 6.2 to 6.8, and $CaCl_2$ concentration is 4mM to 8mM.

**11.** The method according to any of the preceding claims 2 to 7, wherein the milk is obtained from cow the plant extract concentration is 4mg/ml, temperature is 70°C, $CaCl_2$ concentration is 60 mM and pH is 5.5

**12.** Clotted milk obtained by the method described in any of the preceding claims 2 to 11.

**13.** A dairy product obtained by using the clotted milk of claim 12.

**14.** A process to obtain hydrolyzed peptides in edible products using the plant extract according to claim 1.

**15.** Functional food comprising the hydrolyzed peptides obtained with the process of claim 14.

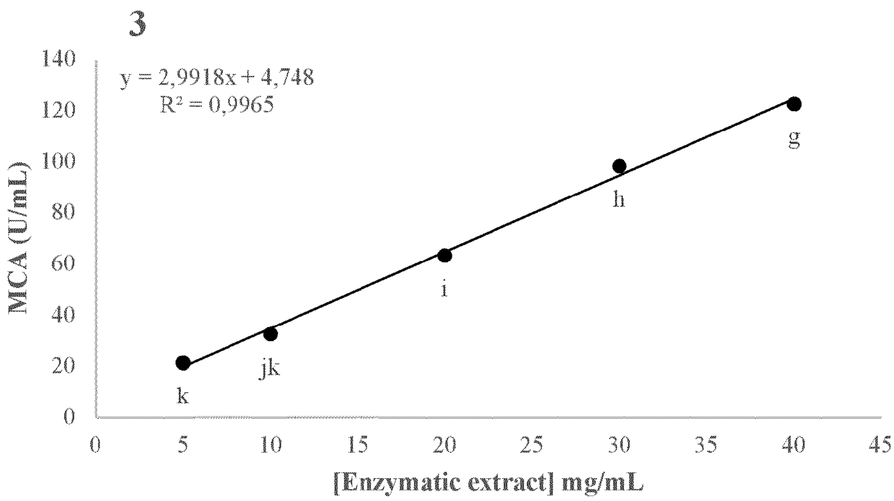
3
y = 2,9918x + 4,748
R² = 0,9965
MCA (U/mL)
[Enzymatic extract] mg/mL
k
jk
i
h
g

Fig. 1

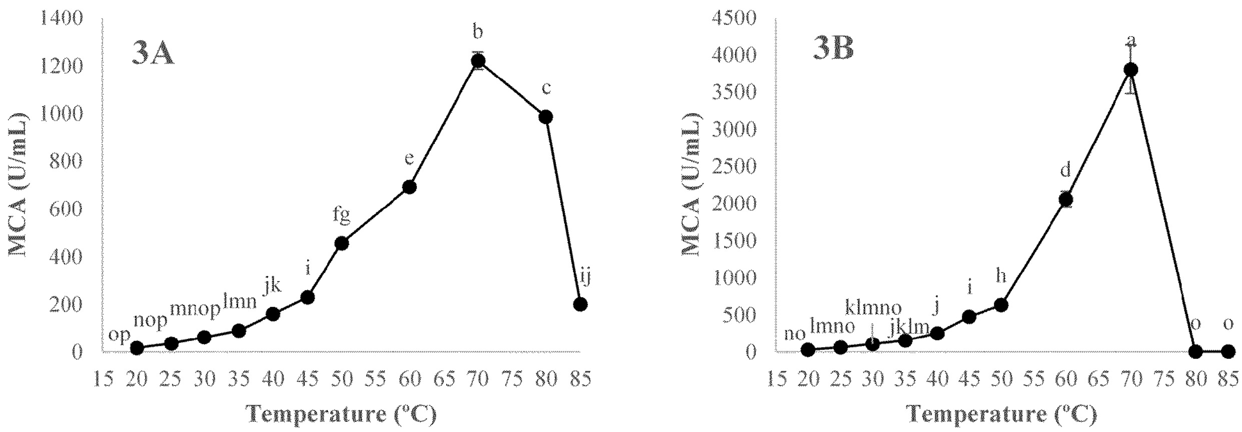
3A
MCA (U/mL)
Temperature (ºC)
op
nop
mnop
lmn
jk
i
fg
e
b
c
ij
3B
MCA (U/mL)
Temperature (ºC)
no
lmno
klmno
jklm
j
i
h
d
a
o
o

Fig. 2

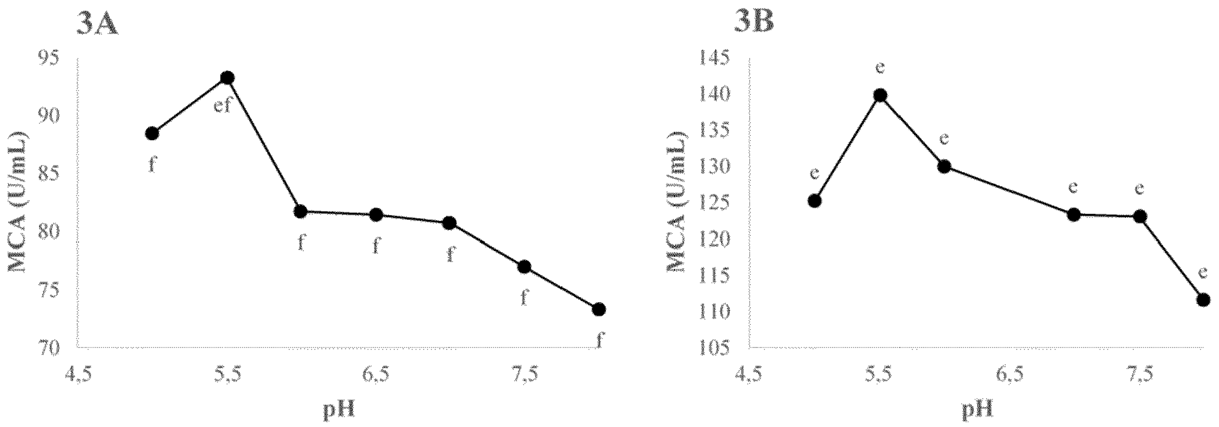
3A
MCA (U/mL)
95
90
85
80
75
70
4,5
5,5
6,5
7,5
pH
f
ef
f
f
f
f
f
3B
MCA (U/mL)
145
140
135
130
125
120
115
110
105
4,5
5,5
6,5
7,5
pH
e
e
e
e
e
e

Fig. 3

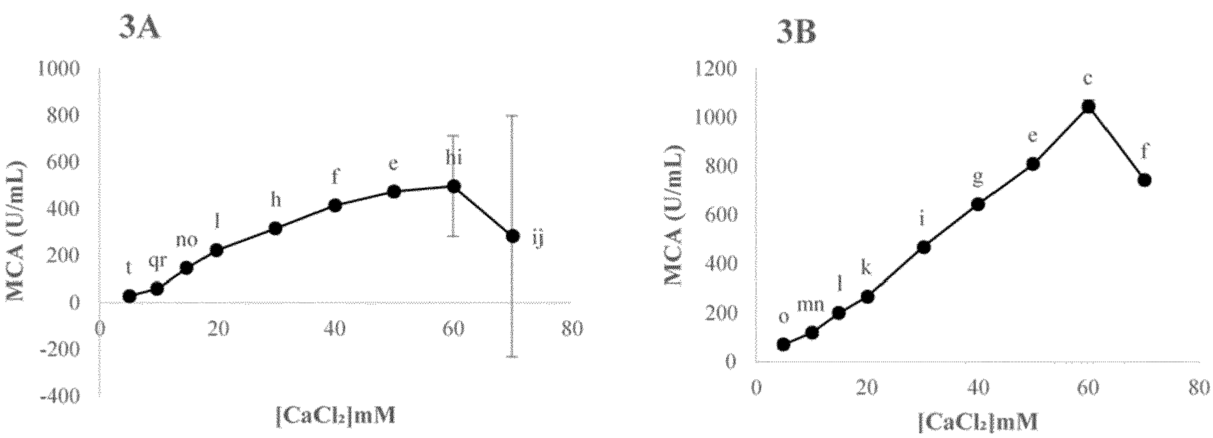
3A
MCA (U/mL)
1000
800
600
400
200
0
-200
-400
0
20
40
60
80
[CaCl₂]mM
t
qr
no
l
h
f
e
hi
ij
3B
MCA (U/mL)
1200
1000
800
600
400
200
0
0
20
40
60
80
[CaCl₂]mM
o
mn
l
k
i
g
e
c
f

Fig. 4

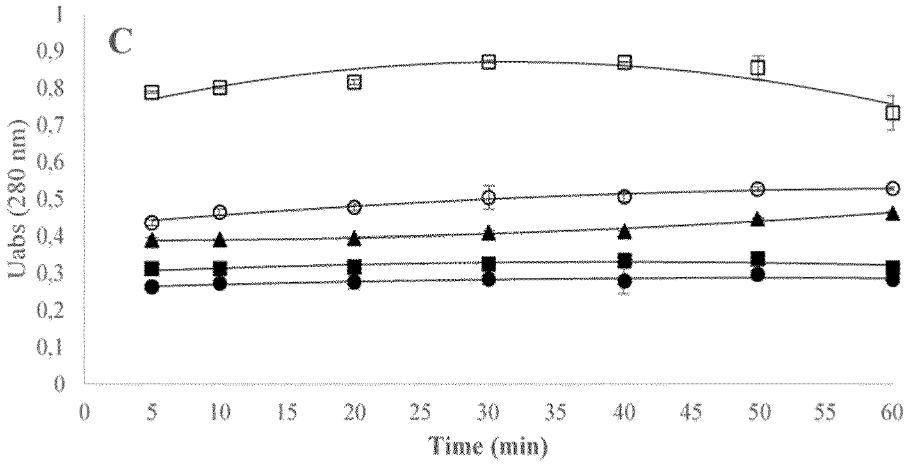
C
Uabs (280 nm)
1
0,9
0,8
0,7
0,6
0,5
0,4
0,3
0,2
0,1
0
0 5 10 15 20 25 30 35 40 45 50 55 60
Time (min)

Fig. 5

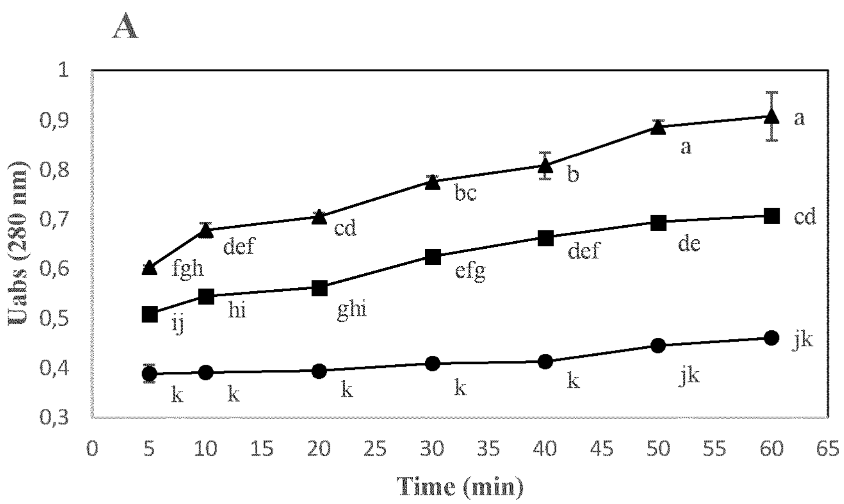
A
Uabs (280 nm)
1
0,9
0,8
0,7
0,6
0,5
0,4
0,3
0 5 10 15 20 25 30 35 40 45 50 55 60 65
Time (min)
fgh def cd bc b a a
ij hi ghi efg def de cd
k k k k k jk jk

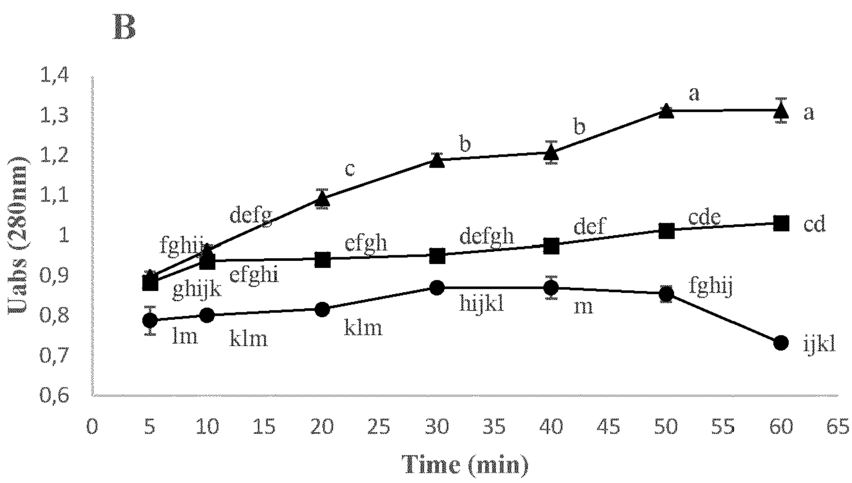
B
Uabs (280nm)
1,4
1,3
1,2
1,1
1
0,9
0,8
0,7
0,6
0 5 10 15 20 25 30 35 40 45 50 55 60 65
Time (min)
fghij defg c b b a a
ghijk efghi efgh defgh def cde cd
lm klm klm hijkl m fghij ijkl

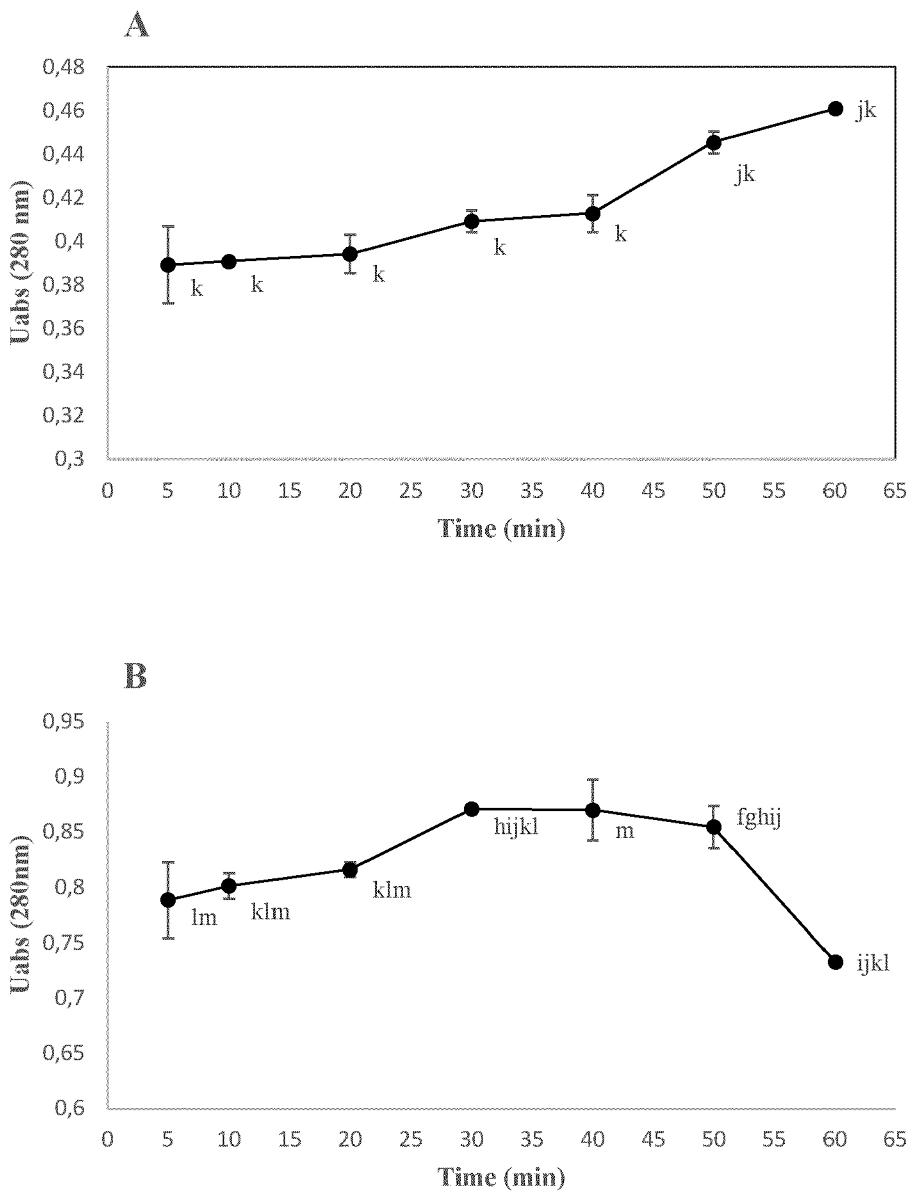
A
0,48
0,46
0,44
0,42
0,4
0,38
0,36
0,34
0,32
0,3
Uabs (280 nm)
0 5 10 15 20 25 30 35 40 45 50 55 60 65
Time (min)
k
k
k
k
k
jk
jk
B
0,95
0,9
0,85
0,8
0,75
0,7
0,65
0,6
Uabs (280nm)
0 5 10 15 20 25 30 35 40 45 50 55 60 65
Time (min)
lm
klm
klm
hijkl
m
fghij
ijkl

Fig. 6

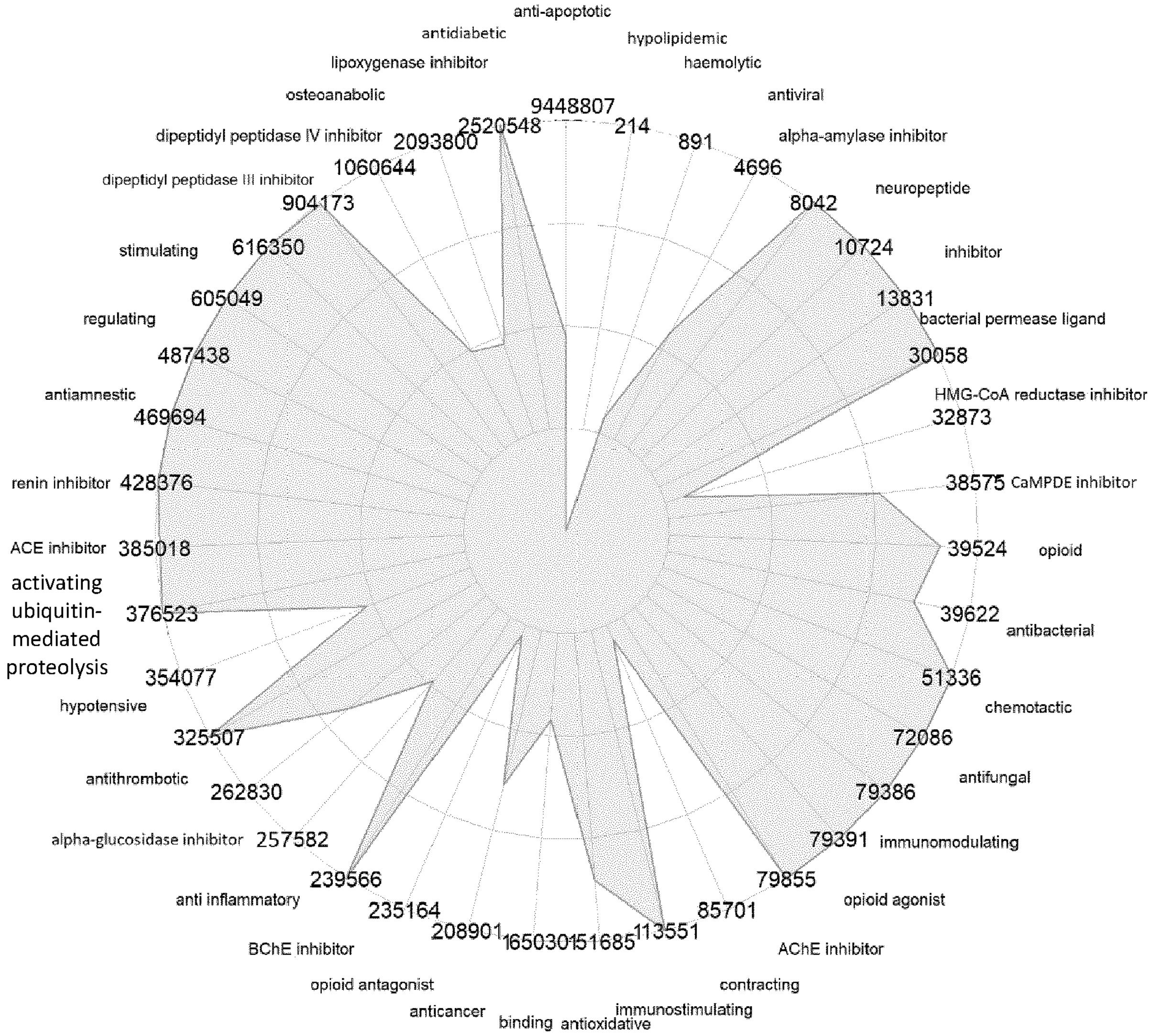
anti-apoptotic
hypolipidemic
haemolytic
antiviral
alpha-amylase inhibitor
neuropeptide
inhibitor
bacterial permease ligand
HMG-CoA reductase inhibitor
CaMPDE inhibitor
opioid
antibacterial
chemotactic
antifungal
immunomodulating
opioid agonist
AChE inhibitor
contracting
immunostimulating
antioxidative
binding
anticancer
opioid antagonist
BChE inhibitor
anti inflammatory
alpha-glucosidase inhibitor
antithrombotic
hypotensive
activating ubiquitin-mediated proteolysis
ACE inhibitor
renin inhibitor
antiamnestic
regulating
stimulating
dipeptidyl peptidase III inhibitor
dipeptidyl peptidase IV inhibitor
osteoanabolic
lipoxygenase inhibitor
antidiabetic
9448807
214
891
4696
8042
10724
13831
30058
32873
38575
39524
39622
51336
72086
79386
79391
79855
85701
113551
151685
165030
208901
235164
239566
257582
262830
325507
354077
376523
385018
428376
469694
487438
605049
616350
904173
1060644
2093800
2520548

Fig. 7

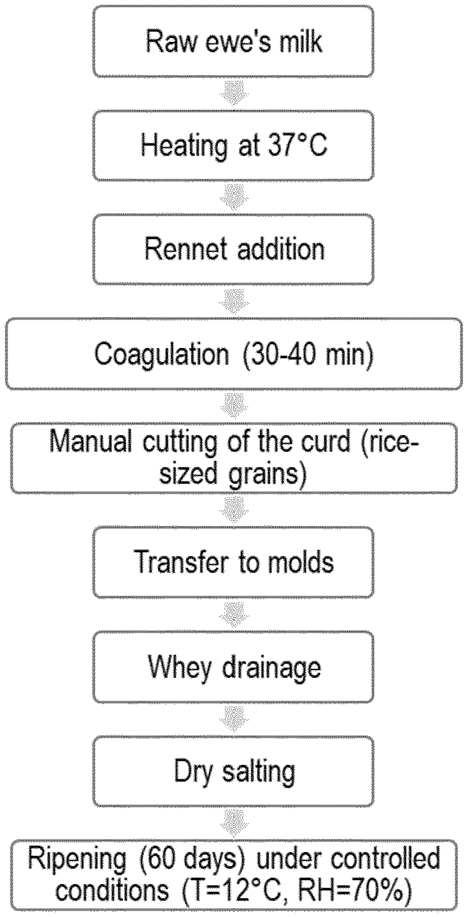
Raw ewe's milk
Heating at 37°C
Rennet addition
Coagulation (30-40 min)
Manual cutting of the curd (rice-sized grains)
Transfer to molds
Whey drainage
Dry salting
Ripening (60 days) under controlled conditions (T=12°C, RH=70%)

Fig. 8

Europäisches Patentamt
European Patent Office
Office européen des brevets

# EUROPEAN SEARCH REPORT

Application Number
EP 23 38 2522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Hachicha S F ET AL: "COMPOSITION CHIMIQUE DE L'HUILE DES GRAINES D' Onopordon nervosum subsp. platylepis Murb (ASTÉRACÉES)", , 19 April 2007 (2007-04-19), pages 1-6, XP093094041, http://www.sctunisie.org/pdf/JSCT_v9-4.pdf Retrieved from the Internet: URL:http://www.sctunisie.org/pdf/JSCT_v9-4.pdf [retrieved on 2023-10-23] * abstract * ----- | 1 | INV. A23C9/12 A23C9/13 A23C9/152 A23C19/04 |
| X | MOZZON MASSIMO ET AL: "Clotting Properties of Onopordum tauricum (Willd.) Aqueous Extract in Milk of Different Species", FOODS, vol. 9, no. 6, 27 May 2020 (2020-05-27), page 692, XP093094141, DOI: 10.3390/foods9060692 | 2-12 | |
| Y | * abstract; tables 1, 5 * * Title * * 2.1 plant material an crude extract preparation * * 2.3.3. Milk Clotting Activity (MCA) assay * * 1 - Introduction * ----- | 2-11 | TECHNICAL FIELDS SEARCHED (IPC) A23C |

-/--

The present search report has been drawn up for all claims

1

| Place of search | Date of completion of the search | Examiner |
|---|---|---|
| Munich | 30 October 2023 | Steiner Ribeiro G. |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

Europäisches Patentamt
European Patent Office
Office européen des brevets

# EUROPEAN SEARCH REPORT

Application Number
EP 23 38 2522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FOLIGNI ROBERTA ET AL: "Potentialities of aqueous extract from cultivated Onopordum tauricum (Willd.) as milk clotting agent for cheesemaking", FOOD RESEARCH INTERNATIONAL, ELSEVIER, AMSTERDAM, NL, vol. 158, 29 June 2022 (2022-06-29), XP087116923, ISSN: 0963-9969, DOI: 10.1016/J.FOODRES.2022.111592 [retrieved on 2022-06-29] | 12 | |
| Y | * page 2, left-hand column, paragraph 2; table 3 * ----- | 2-11 | |
| X | CRISTINA B BRUTTI ET AL: "L. (Asteraceae) flowers as coagulating agent for cheesemaking", LWT- FOOD SCIENCE AND TECHNOLOGY, ACADEMIC PRESS, UNITED KINGDOM, vol. 45, no. 2, 2 September 2011 (2011-09-02), pages 172-179, XP028319225, ISSN: 0023-6438, DOI: 10.1016/J.LWT.2011.09.001 [retrieved on 2011-09-10] | 12,13 | |
| Y | * Conclusions; table 1 * * 3.3. cheese properties and sensory analyses * ----- | 2-11 | TECHNICAL FIELDS SEARCHED (IPC) |

-/--

The present search report has been drawn up for all claims

1

| Place of search | Date of completion of the search | Examiner |
|---|---|---|
| Munich | 30 October 2023 | Steiner Ribeiro G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 3

Europäisches Patentamt
European Patent Office
Office européen des brevets

# EUROPEAN SEARCH REPORT

Application Number
EP 23 38 2522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROCHA GABRIELA FERNANDA ET AL: "Milk-clotting and hydrolytic activities of an aspartic protease from Salpichroa origanifolia fruits on individual caseins", INTERNATIONAL JOURNAL OF BIOLOGICAL MACROMOLECULES, ELSEVIER BV, NL, vol. 192, 14 October 2021 (2021-10-14), pages 931-938, XP086848431, ISSN: 0141-8130, DOI: 10.1016/J.IJBIOMAC.2021.10.004 [retrieved on 2021-10-14] * table 2 * ----- | 1-15 | |
| X | ELENA ORDIALES ET AL: "Characterisation of the vegetable rennets used for 'Torta del Casar' cheesemaking by a protein profile method", INTERNATIONAL JOURNAL OF DAIRY TECHNOLOGY, SOCIETY OF DAIRY TECHNOLOGY, HUNTINGDON, GB, vol. 69, no. 2, 28 October 2015 (2015-10-28), pages 272-281, XP072056437, ISSN: 1364-727X, DOI: 10.1111/1471-0307.12254 * in vitro casein proteolytic activity; page 273; figure 1 * ----- | 14,15 | TECHNICAL FIELDS SEARCHED (IPC) |
| A | MANZOOR AHMAD SHAH ET AL: "Plant proteases as milk-clotting enzymes in cheesemaking: a review", DAIRY SCIENCE & TECHNOLOGY, vol. 94, no. 1, 19 July 2013 (2013-07-19), pages 5-16, XP055689549, FR ISSN: 1958-5586, DOI: 10.1007/s13594-013-0144-3 * the whole document * ----- | 1-13 | |

The present search report has been drawn up for all claims

1

| Place of search | Date of completion of the search | Examiner |
|---|---|---|
| Munich | 30 October 2023 | Steiner Ribeiro G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 3 of 3

Europäisches Patentamt
European Patent Office
Office européen des brevets

Application Number
EP 23 38 2522

## CLAIMS INCURRING FEES

The present European patent application comprised at the time of filing claims for which payment was due.

- [X] Only part of the claims have been paid within the prescribed time limit. The present European search report has been drawn up for those claims for which no payment was due and for those claims for which claims fees have been paid, namely claim(s):

- [ ] No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

- [ ] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [ ] None of the further search fees have been paid within the fixed time limit. The present European search report has been drawn up for those parts of the European patent application which relate to the invention first mentioned in the claims, namely claims:

- [ ] The present supplementary European search report has been drawn up for those parts of the European patent application which relate to the invention first mentioned in the claims (Rule 164 (1) EPC).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **MOZZON M ; FOLIGNI R ; MANNOZZI C ; ZAMPORLINI F ; RAFFAELLI N ; AQUILANTI L.** Clotting Properties of Onopordum tauricum (Willd.). *Aqueous Extract in Milk of Different Species. Foods.,* 2020, vol. 9 (6), 692, https://doi.org/10.3390/foods9060692
- **TEJADA, L. ; FERNÁNDEZ-SALGUERO, J.** Chemical and microbiological characteristics of ewe milk cheese (Los Pedroches) made with a powdered vegetable coagulant or calf rennet. *Italian Journal of Food Science,* 2003, vol. 15 (1), 125-131
- **SILVA, S. V. ; MALCATA, F. X.** Studies pertaining to coagulant and proteolytic activities of plant proteases from Cynara cardunculus. *Food Chemistry,* 2005, vol. 89 (1), 19-26, https://doi.org/10.1016/j.foodchem.2004.01.074
- **DOLORES GONZALEZ DE LLANO ; M. CARMEN POLO ; MERCEDES RAMOS.** Study of Proteolysis in Artisanal Cheeses: High Performance Liquid Chromatography of Peptides. *Journal of Dairy Science,* 1995, vol. 78 (5), ISBN 0022-0302, 1018-1024, https://doi.org/10.3168/jds.S0022-0302(95)76717-0